# EUROPÄISCHE PATENTSCHRIFT

(11) **EP 1 893 453 B1**
(45) Veröffentlichungstag und Bekanntmachung des Hinweises auf die Patenterteilung: **19.11.2008**
(21) Anmeldenummer: 07702730.8
(22) Anmeldetag: 12.01.2007
(51) Int. Cl.: B60R 21/264, B60R 21/26

(54) **VERFAHREN ZUR HERSTELLUNG EINES GASGENERATORS UND MITTELS DES VERFAHRENS HERGESTELLTER GASGENERATOR**
METHOD OF PRODUCING A GAS GENERATOR, AND GAS GENERATOR PRODUCED USING THE METHOD
PROCEDE DE FABRICATION D'UN GENERATEUR DE GAZ ET GENERATEUR DE GAZ FABRIQUE AU MOYEN DU PROCEDE

(30) Priorität: 12.01.2006 DE 102006002435
(43) Veröffentlichungstag der Anmeldung: 05.03.2008
(73) Patentinhaber: Takata-Petri AG, 63743 Aschaffenburg (DE)
(72) Erfinder: JÄGER, Stefan, 73557 Mutlangen (DE); DIRNBERGER, Thomas, 63743 Aschaffenburg (DE); DERVYN, Christophe, 65824 Schwalbach (DE)
(74) Vertreter: Baumgärtel, Gunnar
(86) Internationale Anmeldenummer: PCT/EP2007/000257
(87) Internationale Veröffentlichungsnummer: WO 2007/082689

(56) Entgegenhaltungen:
- WO-A-20/05118356
- DE-A1- 19 954 875
- DE-T2- 60 008 844
- US-A- 6 029 994
- US-A1- 2006 001 246
- US-B1- 6 634 302

## Beschreibung

Die Erfindung betrifft ein Verfahren zur Herstellung eines Gasgenerators sowie einen mittels des Verfahrens hergestellten Gasgenerator gemäß dem Oberbegriff des Anspruchs 26.

Derartige Gasgeneratoren finden insbesondere in Gassackmodulen (beispielsweise für Kraftfahrzeuge) Verwendung und dienen zum Freisetzen von Gas, das zum Aufblasen eines Gassackes eines derartigen Gassackmoduls verwendet wird.

Bekannte Gasgeneratoren weisen hierzu einen Zünder auf, mit dem ein in einem Gehäuse des Gasgenerators befindlicher Treibstoff gezündet werden kann, der zum Erzeugen einer benötigten Gasmenge dient. Bei bekannten Gasgeneratoren wird der Zünder in der Regel durch eine Montageöffnung in das Gehäuse des Gasgenerators eingebracht. Die Montageöffnung wird z.B. mit einem Abdichtmittel (Abdichtelement) abgedichtet, wobei die Schwierigkeit besteht, dass eine Verbindung zwischen dem Zünder und dem Abdichtmittel gasdicht sein muss, damit keine durch den Gasgenerator erzeugten Gase aus der Montageöffnung ausströmen können. Bei bekannten Gasgeneratoren wird deshalb das Abdichtmittel zunächst mit dem Anzünder formschlüssig verklemmt, was eine relativ komplexe Form des Abdichtelementes und somit eine besonders kostenintensive Herstellung des Abdichtelementes bedingt. Anschließend wird die aus zumindest dem Abdichtmittel und dem Zünder gebildete Einheit durch die Montageöffnung in das Gehäuse des Gasgenerators eingebracht, wobei die Montageöffnung mit Hilfe des Abdichtelementes verschlossen, d.h., abgedichtet wird.

Aus der gattungsgemäßen US-A-6 029 994 ist ein Gasgenerator in Form einer zylindrische Röhre bekannt, bei dessen Herstellung zunächst eine Düse in der Röhre befestigt wird. Sodann wird nacheinander ein Filtergitter, eine Hülle, ein Keilring, ein Zünder und ein Abdichtstöpsel in die Röhre eingeführt.

Der Erfindung liegt das Problem zu Grunde, ein Verfahren zur Herstellung eines Gasgenerators und einen mittels des Verfahrens hergestellten Gasgenerator bereitzustellen, bei dem eine gasdichte Verbindung zwischen dem Zünder und dem Abdichtelement auf einfache und kostengünstigere Weise möglich ist.

Dieses Problem wird durch ein Verfahren zur Herstellung eines Gasgenerators mit den Merkmalen des Anspruchs 1, sowie durch einen Gasgenerator mit den Merkmalen des nebengeordneten Anspruchs 26 gelöst.

Das erfindungsgemäße Verfahren sieht vor, dass ein Zünder in einem von einem Gehäuse des herzustellenden Gasgenerators umgebenen Innenraum derart angeordnet wird, dass sich der Zünder entlang einer ersten Richtung an einem Teil des Gasgenerators (z.B. eine Zünderkappe) abstützen kann und entlang der ersten Richtung einer Montageöffnung des Gehäuses gegenüberliegt. Das erfindungsgemäße Verfahren sieht weiterhin vor, dass ein Abdichtelement in oder an der Montageöffnung des Gehäuses zum Abdichten der Montageöffnung derart angeordnet wird, dass das Abdichtelement mit einem deformierbaren Anlagebereich mit einer entlang der ersten Richtung wirkenden Kraft gegen einen ersten Anlagebereich des Zünder drückt, so dass eine gasdichte Verbindung zwischen dem Abdichtelement und dem Zünder gebildet wird, wobei die Deformation des Anlagebereiches des Abdichtelementes entlang der ersten Richtung dadurch begrenzt wird, dass eine dem Teil des Gasgenerators entlang der ersten Richtung zugewandte Seite des Abdichtelementes gegen eine dem Abdichtelement entlang der ersten Richtung zugewandte Seite jenes Teiles des Gasgenerators stoßen kann.

Hierdurch wird das erfindungsgemäße Problem auf vorteilhafte Weise gelöst. Die gasdichte Verbindung zwischen dem Abdichtelement und dem Zünder wird nämlich beim Verschließen der Montageöffnung geschaffen, und zwar dadurch, dass das Abdichtelement nach dem Anordnen des Abdichtelementes in der Montageöffnung entlang der ersten Richtung gegen den Zünder drückt. Vorzugsweise wird die gasdichte Verbindung zwischen dem Abdichtelement und dem Zünder dadurch geschaffen, dass das Abdichtelement unter Wirkung einer axialen, d.h., entlang der ersten Richtung wirkenden Kraft formschlüssig mit dem Gehäuse verbunden wird und infolgedessen entlang der ersten Richtung gegen den Zünder drückt.

Dies erlaubt eine einfache geometrische Form des Abdichtelements. Weiterhin entfällt hierdurch der zusätzliche Montageschritt, gemäß dem das Abdichtelement mit dem Zünder formschlüssig verklemmt wird, um eine gasdichte Verbindung zwischen Abdichtelement und Zünder auszubilden.

Schließlich ist durch Variieren der Länge des Spaltweges zwischen der besagten Seite des Abdichtelementes und der genannten Seite jenes Teils des Gasgenerators die Deformation des besagten Anlagebereiches (Dichtungselement) exakt einstellbar und reproduzierbar, ebenso wie die Kraft, mit der das Abdichtelement entlang der ersten Richtung gegen den Zünder drückt. Der Spaltweg kann natürlich auch so gewählt werden, dass er bei größtmöglicher Deformation des Anlagebereiches (und ggf. weiterer Anlagebereiche) gerade nicht verschlossen oder noch offen ist.

Alternativ zum Anlagebereich des Abdichtelementes wird der erste Anlagebereich des Zünders entlang der ersten Richtung derart durch die Kraft, mit der die beiden Anlagebereiche gegeneinander drücken, deformiert, dass die beiden Anlagebereiche zur Ausbildung der gasdichten Verbindung abdichtend aneinander anliegen. D.h., einer der beiden Anlagebereiche kann als eine beispielsweise nicht deformierbare und glatte Anlagefläche vorliegen, während der andere Anlagebereich entlang der ersten Richtung deformier ausgebildet sein kann, d.h., als ein flexibles, entlang der ersten Richtung deformierbares Dichtelement ausgebildet sein kann, dass sich zur Ausbildung der gasdichten Verbindung abdichtend an die Anlagefläche anlegt, wenn das Abdichtelement in der Montageöffnung angeordnet wird und mit der entlang der ersten Richtung wirkenden Kraft gegen den Zünder drückt. Es können natürlich auch beide Anlagebereiche entlang der ersten Richtung flexibel ausgebildet sein.

In einer bevorzugten Variante des erfindungsgemäßen Verfahrens wird das Abdichtelement derart bezüglich des Zünders angeordnet, dass eine Aussparung des Abdichtelements den Zünder zumindest abschnittsweise umgibt. Hierbei wird bevorzugt ein Kontaktbereich des Zünders, über den der Zünder aktivierbar ist, durch die Aussparung des Abdichtelementes geführt, so dass der Kontaktbereich vom Außenraum des Gehäuses des Gasgenerators her zugänglich ist, nachdem das Abdichtelement in der Montageöffnung angeordnet wurde. Das Abdichtelement kann also eine im Wesentlichen hohlzylindrische Form mit einer ersten und einer zweiten Öffnung aufweisen, die einander gegenüberliegen, wobei der Kontaktbereich des Zünders in einem in der Montageöffnung angeordneten Zustand des Abdichtelementes derart in die erste, dem Innenraum zugewandte Öffnung des Abdichtelementes eingeführt sein kann, dass der Kontaktbereich vom Außenraum des Gehäuses, und zwar von der zweiten Öffnung des Abdichtelementes her, zugänglich ist. Hierbei kann die gasdichte Verbindung zwischen dem Abdichtelement und dem Zünder dadurch ausgebildet werden, dass ein die erste Öffnung des Abdichtelementes berandendes freies Ende des Abdichtelementes eine Anlagefläche ausbildet, die gegen einen Anlagefläche des Zünders drückt.

Bevorzugt wird das Abdichtelement derart in der Montageöffnung angeordnet, dass ein die Aussparung des Abdichtelementes umlaufender Anlagebereich des Abdichtelements zur Ausbildung der gasdichten Verbindung durch die entlang der ersten Richtung wirkende Kraft gegen den ersten Anlagebereich des Zünders gedrückt wird.

Eine weitere Variante des erfindungsgemäßen Verfahrens sieht vor, dass eine Zünderkappe im Innenraum des Gehäuses angeordnet wird, die sich bevorzugt entlang der ersten Richtung an einem im Innenraum befindlichen Teil des Gasgenerators abstützt. Derartige Zünderkappen umgeben eine Druckkammer des Gasgenerators, die mit einem Zündmittel gefüllt ist, das durch den Zünder entzündbar ist. Nach dem Entzünden des Zündmittels mittels des Zünders setzt das Zündmittel heiße Gase frei, die einen Aufreißbereich der Zünderkappe aufgrund ihres Gasdruckes durchstoßen (oder alternativ durch Verbrennen öffnen), so dass sie zum Erzeugen des beispielsweise zum Aufblasen eines Gassackes benötigten Gases den benachbart zur Druckkammer im Gehäuse gelagerten Treibstoff entzünden können.

Bevorzugt ist vorgesehen, dass eine Deformation sowohl des Anlagebereiches des Abdichtelementes als auch des ersten Anlagebereiches des Zünders entlang der ersten Richtung dadurch begrenzt wird, dass die der Zünderkappe entlang der ersten Richtung zugewandten Seite des Abdichtelementes gegen die dem Abdichtelement entlang der ersten Richtung zugewandten Seite der Zünderkappe stößt, d.h., zur Anlage an die Seite der Zünderkappe gebracht wird.

Vorzugsweise wird die Zünderkappe derart im Innenraum des Gehäuses angeordnet, dass eine Öffnung der Zünderkappe entlang der ersten Richtung der Montageöffnung des Gehäuses zugewandt ist.

Eine bevorzugte Variante des erfindungsgemäßen Verfahrens sieht vor, dass das Abdichtelement außerhalb des Innenraums des Gehäuses mit dem Zünder zu einem Untermodul vormontiert wird. Hierbei wird der Zünder derart am Abdichtelement vorfixiert, dass der Anlagebereich des Abdichtelementes dem ersten Anlagebereich des Zünders zugewandt ist, und dass die beiden Anlagebereiche gegeneinander gepresst werden, wenn das Abdichtelement entlang der ersten Richtung gegen den Zünder gedrückt wird, der sich im Gehäuse des Gasgenerators entlang der ersten Richtung an einem Teil des Gasgenerators abstützen kann.

Das Untermodul wird also zum Anordnen des Abdichtelementes in der Montageöffnung vorzugsweise mit dem Zünder voran entlang der ersten Richtung durch die Montageöffnung in das Gehäuse eingeführt. Das in dem Gasgenerator befindliche Teil des Gasgenerators, an dem sich der im Gehäuse des Gasgenerators angeordnete Zünder abstützt, fungiert also als ein Widerlager, das die Kraft aufnimmt, mit der das Abdichtelement gegen den Zünder drückt.

Bevorzugt wird der Zünder derart im Innenraum des Gasgenerators angeordnet, dass er die Öffnung der Zünderkappe zur Ausbildung einer Druckkammer des Gasgenerators abdeckt. D.h., derjenige Teil des Gasgenerators, an dem sich der Zünder entlang der ersten Richtung abstützt, wird bevorzugt durch die im Innenraum des Gehäuses angeordnete Zünderkappe gebildet.

Vorzugsweise wird der Zünder mit einem freien Endabschnitt entlang der ersten Richtung in die Öffnung der Zünderkappe eingeführt, wobei der Zünder in einer senkrecht zur ersten Richtung orientierten Ebene positioniert wird. Hierzu kann die Öffnung der Zünderkappe derart ausgebildet sein, dass sie sich entlang der ersten Richtung verjüngt, so dass der Zünder mit seinem freien Endabschnitt beim Bewegen entlang der ersten Richtung durch die Ausformung der Öffnung, bzw. durch die Ausformung eines die Öffnung umlaufenden Bereichs, quer zur ersten Richtung in der Öffnung zentriert wird.

In einer bevorzugten Variante des erfindungsgemäßen Verfahrens wird das Abdichtelement derart in der Montageöffnung angeordnet, dass der Zünder zum gasdichten Verschließen der Druckkammer mit einem zweiten Anlagebereich mit der entlang der ersten Richtung wirkenden Kraft gegen einen die Öffnung der Zünderkappe umlaufenden Anlagebereich der Zünderkappe gedrückt wird, der dem zweiten Anlagebereich des Zünders entlang der ersten Richtung gegenüberliegt.

Vorzugsweise wird der zweite Anlagebereich des Zünders und / oder der Anlagebereich der Zünderkappe entlang der ersten Richtung durch die Kraft derart deformiert, dass die beiden Anlagebereiche zum gasdichten Verschließen der Druckkammer abdichtend aneinander anliegen. Auch hier kann einer der beiden Anlagebereiche als ein flexibles Dichtelement ausgebildet sein, das entlang der ersten Richtung deformierbar ist, während der andere Anlagebereich als eine beispielsweise harte und glatte Anlagefläche ausgebildet sein kann, gegen die das flexible Dichtelement gedrückt wird. Alternativ können auch beide Anlagebereiche entlang der ersten Richtung elastisch deformierbar ausgebildet sein.

Weiterhin wird bevorzugt die Deformation des zweiten Anlagebereiches des Zünders und / oder des Anlagebereiches der Zünderkappe entlang der ersten Richtung dadurch begrenzt, dass eine der Zünderkappe entlang der ersten Richtung zugewandten Seite des Abdichtelementes gegen eine dem Abdichtelementes entlang der ersten Richtung zugewandten Seite der Zünderkappe stößt, d.h., zur Anlage an die Seite der Zünderkappe gebracht wird.

In einem weiteren bevorzugten Ausführungsbeispiel des erfindungsgemäßen Verfahrens wird ein Prallelement im Innenraum des Gehäuses des Gasgenerators derart angeordnet, dass sich das Prallelement an einer der Montageöffnung entlang der ersten Richtung zugewandten Innenseite des Gehäuses abstützt. Derartige Prallelemente dienen zur Verwirbelung der mittels des herzustellenden Gasgenerators freisetzbaren Gase im Innenraum des Gehäuses.

Vorzugsweise wird entlang der ersten Richtung zwischen der Innenseite und dem Prallelement ein Federelement angeordnet, welches entlang der ersten Richtung elastisch deformierbar ist.

In einer weiteren Variante des erfindungsgemäßen Verfahrens wird eine Treibstoffhülse im Innenraum des Gehäuses des Gasgenerators derart angeordnet, dass sich die Treibstoffhülse mit einem dem Prallelement entlang der ersten Richtung gegenüberliegenden Randbereich an dem Prallelement abstützen kann. Die Treibstoffhülse dient als Behältnis für einen Treibstoff, der zum Erzeugen des zum Aufblasen eines Gassackes benötigten Gases durch den Zünder gezündet wird.

Vorzugsweise wird entlang der ersten Richtung in die mit dem Treibstoff befüllte Treibstoffhülse ein elastisch verformbares Volumenausgleichselement eingeführt, welches einen nicht mit Treibstoff befüllten Teil der Treibstoffhülse einnimmt, so dass der Treibstoff mittels des Volumenausgleichselementes entlang der ersten Richtung derart eingegrenzt wird, dass eine Bewegung des Treibstoffes entlang der ersten Richtung unterdrückt wird.

In einer Variante des erfindungsgemäßen Verfahrens wird das Abdichtelement derart in der Montageöffnung angeordnet, dass die durch das Abdichtelement auf den Zünder ausgeübte Kraft über die Treibstoffhülse und das Prallelement in das Gehäuse des Gasgenerators eingeleitet wird.

In einer alternativen Variante des erfindungsgemäßen Verfahrens wird zwischen dem Prallelement und der Innenseite des Gehäuses, die entlang der ersten Richtung der Montageöffnung zugewandt ist, ein Federelement angeordnet, das die Kraft aufnimmt, mit der das Abdichtelement entlang der ersten Richtung gegen den Zünder drückt. In diesem Fall wird also die durch das Abdichtelement auf den Zünder ausgeübte Kraft über die Zünderkappe auf die Treibstoffhülse übertragen, von der Treibstoffhülse in das Prallelement eingeleitet und daraufhin auf das entlang der ersten Richtung sich anschließende Federelement übertragen, das durch die Kraft entlang der ersten Richtung gespannt wird.

In einer besonders bevorzugten Variante des erfindungsgemäßen Verfahrens wird das Abdichtelement mit einem die Montageöffnung umlaufenden Bereich des Gehäuses des Gasgenerators formschlüssig verklemmt, wodurch die entlang der ersten Richtung wirkende Kraft erzeugt wird, die das Abdichtelement gegen den Zünder drückt. Vorzugsweise erfolgt dieses Verklemmen derart, dass jener Bereich quer zur ersten Richtung in einen vom Gehäuse umgebenen Innenraum abragt und quer zur ersten Richtung in eine Ausnehmung, insbesondere eine Nut, des Abdichtelementes eingreift, wobei er diese vorzugsweise vollständig ausfüllt.

In einer alternativen Variante des erfindungsgemäßen Verfahrens ist vorgesehen, dass das Abdichtelement in die Montageöffnung geschraubt wird, so dass das Abdichtelement mit der entlang der ersten Richtung wirkenden Kraft gegen den Zünder drückt.

Weiterhin wird das der Erfindung zu Grunde liegende Problem durch einen Gasgenerator mit den Merkmalen des Anspruchs 26 gelöst.

Bei einem derartigen Gasgenerator, mit einem Gehäuse des Gasgenerators, das einen mit Treibstoff befüllbaren Innenraum des Gasgenerators umgibt, mit einem Zünder zum Zünden des Treibstoffes, so dass der Treibstoff ein Gas erzeugt, wobei sich der Zünder entlang einer ersten Richtung an einem Teil des Gasgenerators abstützt, mit einer Montageöffnung des Gehäuses, durch die bei der Herstellung des Gasgenerators Komponenten des Gasgenerators in den Innenraum des Gasgenerators eingeführt werden können, und mit einem Abdichtelement zum Verschließen der Montageöffnung, das derart in der Montageöffnung angeordnet ist, dass es mit einer entlang der ersten Richtung wirkenden Kraft gegen den Zünder drückt, wobei das Abdichtelement einen Anlagebereich (Dichtungselement) aufweist, der entlang der ersten Richtung gegen einen ersten Anlagebereich des Zünders drückt, so dass der Anlagebereich zur abdichtenden Anlage am ersten Anlagebereich des Zünders entlang der ersten Richtung deformiert wird, ist erfindungsgemäß vor der Deformation des Anlagebereiches zwischen dem Abdichtelement und dem Teil des Gasgenerators ein Spalt ausgebildet, der durch Drücken des Abdichtelementes entlang der ersten Richtung in die Montageöffnung verschließbar ist, so dass die Deformation des Anlagebereiches des Abdichtelementes entlang der ersten Richtung begrenzt wird.

Dies ermöglicht die Herstellung einer gasdichte Verbindung zwischen dem Abdichtelement und dem Zünder, die keine komplexe Form des Abdichtelements voraussetzt, da der Zünder zur Ausbildung der gasdichten Verbindung lediglich entlang der ersten Richtung gegen den Zünder drücken muss, wobei aufgrund des Spaltes die Deformation des Anlagebereiches des Abdichtelementes entlang der ersten Richtung exakt reproduzierbar ist, ebenso wie die Kraft, mit der das Abdichtelement entlang der ersten Richtung gegen den Zünder drückt.

In einer alternativen Variante der Erfindung ist der erste Anlagebereich des Zünders als ein entlang der ersten Richtung deformierbares erstes Dichtungselement ausgebildet, so dass die beiden entlang der ersten Richtung gegeneinander gedrückten Anlagebereiche abdichtend aneinander anliegen können. Bei dem Anlagebereich des Abdichtelementes bzw. des ersten Anlagebereiches des Zünders kann es sich insbesondere um einen Dichtungsring handeln, der entlang der ersten Richtung zwischen dem Abdichtelement und dem Zünder angeordnet ist. Weiterhin kann ein solcher Dichtungsring an dem Abdichtelement bzw. dem Zünder geeignet fixiert werden, so dass dieser bei der Herstellung des Gasgenerators nicht separat angeordnet werden muss. Es ist auch denkbar ein Dichtungselement an das Abdichtelement oder den Zünder anzuschäumen und somit einen entlang der ersten Richtung deformierbaren Anlagebereich auszubilden. Weiterhin können natürlich auch beide Anlagebereiche entlang der ersten Richtung flexibel ausgebildet sein. Vorzugsweise ist vorgesehen, dass der genannte Spalt durch besagtes Drücken des Abdichtelementes entlang der ersten Richtung verschließbar ist, so dass die Deformation des ersten Dichtungselementes entlang der ersten Richtung begrenzt wird.

In einer bevorzugten Ausführungsform der Erfindung ist vorgesehen, dass das Abdichtelement eine Aussparung aufweist, die zur Aufnahme eines Kontaktbereichs des Zünders dient, über den der Zünder aktivierbar ist. Die Aussparung dient also dazu, den Kontaktbereich des Zünders aus dem Innenraum des Gasgenerators herauszuführen, so dass er vom Außenraum des Gasgenerators her zugänglich ist.

Bevorzugt umläuft der Anlagebereich des Abdichtelementes die Aussparung des Abdichtelementes quer zur ersten Richtung ringförmig und berandet dabei die Aussparung des Abdichtelementes.

Bevorzugt ist das Abdichtelement derart an dem Gehäuse befestigt, dass es zusammen mit dem Zünder die Montageöffnung gasdicht verschließt. Bevorzugt bilden das Abdichtelement und der Zünder ein vormontiertes Untermodul, bei dem der Zünder derart an dem Abdichtelement vorfixiert ist, dass die beiden Elemente gemeinsam in das Gehäuse des Gasgenerators einführbar sind.

In einer besonders bevorzugten Variante der Erfindung ist vorgesehen; dass derjenige Teil des Gasgenerators, an dem sich der Zünder abstützt, als eine Zünderkappe ausgebildet ist, die eine Druckkammer des Gasgenerators umgibt. Eine solche Druckkammer dient zum Verdichten von heißen Gasen, die von einem in der Druckkammer angeordneten Zündmittel erzeugt werden, wenn dieses mittels des Zünders gezündet wird. Diese heißen Gase werden im Gasgenerator zum Ort des Treibstoffes geleitet und entzünden den Treibstoff, woraufhin dieser das zum Aufblasen eines Gassackes benötigte Gas erzeugt.

Vorzugsweise weist die Zünderkappe eine Öffnung auf, die entlang der ersten Richtung der Montageöffnung gegenüberliegt. Durch diese Öffnung kann beispielsweise ein Zündmittel in die Druckkammer eingebracht werden. Vorzugsweise ist die Öffnung der Zünderkappe von einem Anlagebereich der Zünderkappe berandet, der die Öffnung in sich geschlossen, d.h., ringförmig umläuft.

In einer weiteren Variante der Erfindung ist vorgesehen, dass der Anlagebereich der Zünderkappe zur Positionierung des Zünders quer zur ersten Richtung trichterförmig ausgebildet ist. D.h., der Anlagebereich weist eine dem Zünder entlang der ersten Richtung zugewandte Seite auf, die bezüglich der ersten Richtung geneigt ist und somit dafür sorgt, dass der Zünder quer zur ersten Richtung in der Öffnung der Zünderkappe zentriert wird, wenn er entlang der ersten Richtung bewegt wird und mit einem freien Ende gegen diese geneigte Seite des Anlagebereiches stößt.

Vorzugsweise ist das Abdichtelement derart in der Montageöffnung angeordnet, dass es den Zünder mit einem zweiten Anlagebereich des Zünders zum gasdichten Verschließen der Druckkammer mit der entlang der ersten Richtung wirkenden Kraft gegen den Anlagebereich der Zünderkappe drückt.

Hierbei ist bevorzugt der zweite Anlagebereich des Zünders und/oder der Anlagebereich der Zünderkappe entlang der ersten Richtung deformierbar ausgebildet, d.h., als ein entlang der ersten Richtung deformierbares zweites Dichtungselement ausgebildet, das entlang der ersten Richtung derart elastisch deformiert ist, dass die beiden Anlagebereiche abdichtend aneinander anliegen. Ein solches Dichtungselement kann als ein Dichtungsring ausgebildet sein, der an dem Zünder bzw. der Zünderkappe angeordnet ist und somit den Anlagebereich des Zünders bzw. der Zünderkappe ausbildet. Dieses Dichtungselement kann ferner an dem Zünder bzw. der Zünderkappe fixiert sein oder direkt an den Zünder bzw. die Zünderkappe angeschäumt sein. Alternativ können beide Anlagebereiche (zur abdichtenden Anlage aneinander) entlang der ersten Richtung elastisch verformbar ausgebildet sein.

Ein weiteres Ausführungsbeispiel der Erfindung sieht vor, dass der zwischen dem Abdichtelement und der Zünderkappe umlaufende Spalt durch besagtes Drücken des Abdichtelementes entlang der ersten Richtung (in Richtung auf den Zünder) verschließbar ist, so dass die Deformation des zweiten Dichtungselementes entlang der ersten Richtung begrenzt wird.

In einer Variante der Erfindung ist vorgesehen, dass der Gasgenerator eine mit Treibstoff befüllte Treibstoffhülse aufweist, die sich im Innenraum des Gehäuses entlang der ersten Richtung erstreckt, wobei bevorzugt entlang der ersten Richtung ein Volumenausgleichselement in die Treibstoffhülse eingeführt ist, welches entlang der ersten Richtung derart gegen den Treibstoff drückt, dass eine unkontrollierte Bewegung des Treibstoffes in der Treibstoffhülse unterbunden wird. Ein solches Volumenausgleichselement besteht vorteilhafterweise aus einem Metallfaservlies, welches Hitzebeständig ist und durch die beim Zünden eines Treibstoffes bzw. eines Zündmittels entstehenden heißen Gase nicht verbrennt.

Vorzugsweise weist die Treibstoffhülse, die beispielsweise zylinderförmig aufgebaut sein kann, eine erste Öffnung auf, die entlang der ersten Richtung der Montageöffnung gegenüberliegt, wobei bevorzugt die erste Öffnung der Treibstoffhülse von einem ersten Randbereich der Treibstoffhülse berandet wird.

In einer Variante der Erfindung ist vorgesehen, dass dieser erste Randbereich der Treibstoffhülse als ein Widerlager für die im Innenraum des Gehäuses des Gasgenerators angeordnete Zünderkappe dient. Das heißt, die Zünderkappe kann sich entlang der ersten Richtung an dem ersten Randbereich der Treibstoffhülse abstützen. Die Kraft, die das Abdichtelement entlang der ersten Richtung auf den Zünder ausübt wird somit über die Treibstoffhülse in das Gehäuse des Gasgenerators eingeleitet.

Weiterhin weist die Treibstoffhülse bevorzugt eine zweite Öffnung auf, die der ersten Öffnung entlang der ersten Richtung gegenüberliegt. Bevorzugt stützt sich die Treibstoffhülse mit einem zweiten Randbereich, der diese zweite Öffnung der Treibstoffhülse berandet, an einem Prallelement ab, dass entlang der ersten Richtung zwischen der Treibstoffhülse und einer der Montageöffnung zugewandten Innenseite des Gehäuses des Gasgenerators angeordnet ist. Ein derartiges Prallelement dient zur Verwirbelung der in der Treibstoffhülse erzeugbaren Gase. Hierzu weist das Prallelement bevorzugt einen flächigen Bereich auf, der sich quer zur ersten Richtung erstreckt und die zweite Öffnung der Treibstoffhülse verschließt.

Die in der Treibstoffhülse mittels des Treibstoffs erzeugten Gase treffen auf diesen flächigen Bereich, wobei sie verwirbelt werden und quer zur ersten Richtung durch erste Ausströmöffnungen, die entlang des ersten Randbereiches an der Treibstoffhülse ausgebildet sind, aus der Treibstoffhülse entweichen können. Von diesen ersten Ausströmöffnungen der Treibstoffhülse werden die verwirbelten Gase zu zweiten Ausströmöffnungen geleitet, die an derjenigen Innenseite ausgebildet sind, die der Montageöffnung entlang der ersten Richtung zugewandt ist.

Das Prallelement stützt sich bevorzugt entlang der ersten Richtung an dieser Innenseite des Gehäuses des Gasgenerators ab, so dass die Kraft, die das Abdichtelement auf den Zünder ausübt, entlang der ersten Richtung über die Zünderkappe, die Treibstoffhülse und das Prallelement in das Gehäuse des Gasgenerators eingeleitet wird.

In einer alternativen Variante der Erfindung ist vorgesehen, dass sich das Prallelement entlang der ersten Richtung an einem Federelement abstützt, das entlang der ersten Richtung zwischen der Innenseite und dem Prallelement angeordnet ist. Das Federelement wird durch die entlang der ersten Richtung wirkende Kraft, die das Abdichtelement auf den Zünder ausübt, entlang der ersten Richtung gespannt, d.h., elastisch deformiert. Das Federelement kann in Abhängigkeit von der Elastizität bzw. Rückstellkraft der Dichtungselemente derart ausgelegt werden, dass beim Anordnen des Abdichtelementes in der Montageöffnung das Abdichtelement entlang der ersten Richtung stets mit der gleichen Kraft gegen den Zünder drückt.

In einem besonders bevorzugten Ausführungsbeispiel der Erfindung ist das Abdichtelement derart formschlüssig mit einem die Montageöffnung umlaufenden Bereich des Gehäuses des Gasgenerators verklemmt, und zwar vorzugsweise durch Umformen jenes Bereiches, dass das Abdichtelement mit der entlang der ersten Richtung wirkenden Kraft gegen den Zünder drückt. Der Bereich des Gehäuses steht hierzu quer zur ersten Richtung vom Gehäuse in den Innenraum des Gehäuses ab und greift bevorzugt zum Festlegen des Abdichtelementes in der Montageöffnung in eine Ausnehmung des Abdichtelementes ein, die vorzugsweise als eine am Abdichtelement umlaufende Nut ausgebildet ist. Bevorzugt wird durch Umformen (Verkrimpen) eines den besagten Bereich umfassenden Gehäuseteiles bewirkt, dass jener Bereich zum Festlegen des Abdichtelementes in der Montageöffnung in die Ausnehmung (Nut) eingreift.

In einer alternativen Variante der Erfindung ist das Abdichtelement derart in die Montageöffnung geschraubt, dass das Abdichtelement mit der entlang der ersten Richtung wirkenden Kraft gegen den Zünder drückt.

D.h., die entlang der ersten Richtung wirkende Kraft, die einerseits eine gasdichte Verbindung zwischen dem Abdichtelement und dem Zünder herstellt, indem das Abdichtelement mit der Kraft gegen den Zünder gedrückt wird und andererseits eine Abdichtung der von der Zünderkappe und dem Zünder gebildeten Druckkammer ermöglicht, wird beim Anordnen des Abdichtelementes in der Montageöffnung aufgebracht, wobei das Abdichtelement derart in der Montageöffnung angeordnet wird, bzw. angeordnet ist, dass die vom Abdichtelement auf den Zünder ausgeübte Kraft aufrecht erhalten wird bzw. wirksam bleibt.

Weitere Einzelheiten und Vorteile der Erfindung werden bei der nachfolgenden Beschreibung von Ausführungsbeispielen anhand der Figuren deutlich werden.

Es zeigen:
- Figur 1: eine schematische Schnittansicht eines Gasgenerators,
- Figur 2: eine Abwandlung des in der Figur 1 gezeigten Gasgenerators, und
- Figur 3: eine weitere Abwandlung des in der Figur 1 gezeigten Gasgenerators.

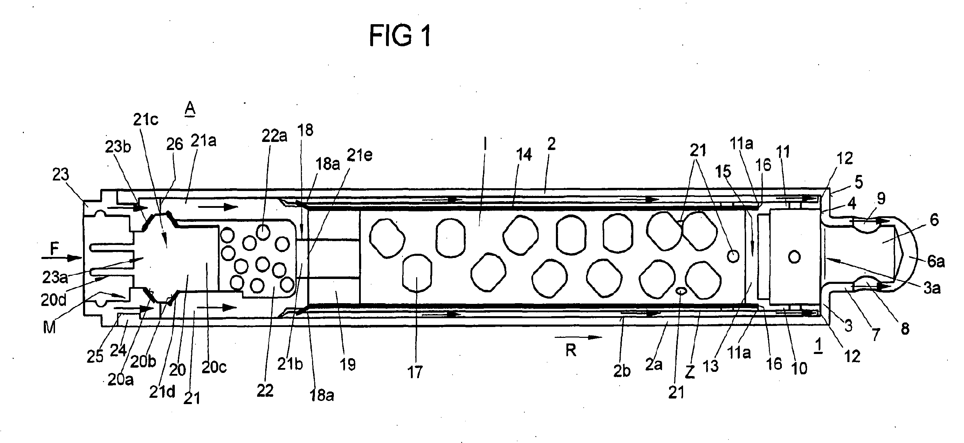

Figur 1 zeigt eine schematische Schnittansicht eines Gasgenerators 1, mit einem entlang einer ersten Richtung R längs erstreckten Gehäuse 2. Das Gehäuse 2 des Gasgenerators 1 ist im Wesentlichen zylinderförmig ausgebildet und umgibt einen Innenraum I des Gasgenerators 1, in den durch eine Montageöffnung M des Gehäuses 2 entlang der ersten Richtung R Komponenten des Gasgenerators 1, beispielsweise bei der Herstellung des Gasgenerators 1, einführbar sind.

Die Zylinderachse des zylinderförmigen Gehäuses 2 des Gasgenerators 1 verläuft entlang der ersten Richtung R und liegt in der Schnittebene der in der Figur 1 gezeigten Schnittdarstellung. Die Montageöffnung M wird durch eine offene Seite des zylinderförmigen Gehäuses 2 gebildet und von einem entlang der ersten Richtung R erstreckten Mantel 2a des zylinderförmigen Gehäuses 2 berandet, wobei der Montageöffnung M entlang der ersten Richtung R eine Seitenwand 3 des Gehäuses 2 gegenüberliegt, die kreisförmig ausgebildet ist und eine Innenseite 4 aufweist, die der Montageöffnung M zugewandt ist. Von einer der Innenseite 4 abgewandten Außenseite 5 der Seitenwand 3 steht mittig entlang der ersten Richtung R ein zylinderförmiger Gasaustrittskörper 6 von der Außenseite 5 ab, der quer zur ersten Richtung R einen kleineren Durchmesser aufweist als die kreisförmige Seitenwand 3 (bzw. der Mantel 2a) und über eine mittig an der Seitenwand 3 ausgebildete Öffnung 3a an den Innenraum I des Gehäuses 2 angeschlossen ist.

An einer entlang der ersten Richtung erstreckten zylindermantelförmigen Seitenwand 7 des Gasaustrittskörpers 6 ist eine erste und eine zweite Ausströmöffnung 8, 9 vorgesehen, durch die Gas in den den Gasgenerator 1 umgebenden Außenraum A strömen kann, wobei die beiden Ausströmöffnungen 8, 9 quer zur ersten Richtung R einander gegenüberliegen. Von dieser Seitenwand 7 des Gasaustrittskörpers 6 geht rechtwinklig, d.h., quer zur ersten Richtung R eine im Wesentlichen kreisförmige Seitenwand 6a des Gasaustrittskörpers 6 ab, die der Öffnung 3a der Seitenwand 3 entlang der ersten Richtung R gegenüberliegt.

Durch die Montageöffnung M des Gehäuses 2 ist entlang der ersten Richtung R ein zylinderförmiges Prallelement 10 in den Innenraum I des Gehäuses 2 eingeführt. Das Prallelement 10 weist eine mantelförmige Wandung 11 auf, die quer zur ersten Richtung R beabstandet zum Mantel 2a des Gehäuses 2 angeordnet ist. D.h., dass Prallelement 10 besitzt quer zur ersten Richtung R einen Durchmesser, der kleiner ist als der Innendurchmesser des Gehäuses 2 quer zur ersten Richtung R, wobei die Zylinderachse des Prallelementes 10 mit der Zylinderachse des Gehäuses 2 fluchtet.

Das Prallelement 10 ist entlang der ersten Richtung R zur Öffnung 3a des Gasaustrittskörpers 6 hin geöffnet und weist dementsprechend eine Öffnung auf, die von einem die Öffnung umlaufenden, ringförmigen Randbereich 12 der zylinderförmigen Wandung 11 des Prallelementes 10 berandet wird. Dieser Randbereich 12 des Prallelementes 10 ist der Innenseite 4 der Seitenwand 3 des Gehäuses 2 zugewandt und stützt sich entlang der ersten Richtung R an dieser ab.

Der vom Randbereich 12 umlaufenden Öffnung des Prallelementes 10 liegt entlang der ersten Richtung R ein flächiger Bereich 13 des Prallelementes 10 gegenüber, der sich quer zur ersten Richtung R erstreckt und einen kreisförmigen Boden des zylinderförmigen Prallelementes 10 ausbildet.

Der kreisförmig ausgebildete, flächige Bereich 13 des Prallelementes 10 weist quer zur ersten Richtung R einen Durchmesser auf, der kleiner ist als der Durchmesser der mantelförmigen Wandung 11 des Prallelementes 10. Hierdurch wird an einem äußeren, den flächigen Bereich 13 quer zur ersten Richtung R umlaufenden Rand des flächigen Bereiches 13 eine Stufe 11a des Prallelementes 10 ausgebildet, die entlang der ersten Richtung R der Montageöffnung M gegenüberliegt.

An dem Prallelement 10 stützt sich entlang der ersten Richtung R eine zylinderförmige Treibstoffhülse 14 ab, deren Zylinderachse ebenfalls mit der Zylinderachse des Gehäuses 2 des Gasgenerators 1 fluchtet. Der Außendurchmesser der Treibstoffhülse 14 entspricht im Wesentlichen dem Außendurchmesser des Prallelementes 10 (bzw. der zylinderförmigen Wandung 11 des Prallelementes 10) quer zur ersten Richtung R, so dass die Treibstoffhülse 14 ebenso wie das Prallelement 10 quer zur ersten Richtung R beabstandet zu einer dem Innenraum I zugewandten Innenseite 2b des Mantels 2a des Gehäuses 2 angeordnet ist.

Die Treibstoffhülse 14 weist eine der Montageöffnung M entlang der erste Richtung R zugewandte erste Öffnung 18 auf, die von einem ersten Randbereich 18a ringförmig umlaufen wird sowie eine der ersten Öffnung 18 gegenüberliegende zweite Öffnung 15, die durch den flächigen Bereich 13 des Prallelementes 10 verschlossen wird, wobei die zweite Öffnung 15 der Treibstoffhülse 14 von einem zweiten Randbereich 16 berandet wird, der die zweite Öffnung 15 quer zur ersten Richtung R umläuft und der Seitenwand 3 des Gehäuses 2 entlang der ersten Richtung R zugewandt ist. Mit diesem zweiten Randbereich 16 stützt sich die Treibstoffhülse 14 an der Stufe 11a des Prallelementes 10 ab, so dass eine in die Treibstoffhülse 14 eingeleitete Kraft F, die entlang der ersten Richtung R verläuft im Wesentlichen ohne eine Richtungsänderung in die zylindermantelförmige Wandung 11 des Prallelementes 10 eingeleitet wird und über den Randbereich 12 des Prallelementes 10 auf die Seitenwand 3, d. h., auf das Gehäuse 2 übertragen wird.

Die Treibstoffhülse 14 ist mit einem tablettenförmigen Treibstoff 17 befüllt (in der Figur 1 schematisch dargestellt). Dies kann durch die erste Öffnung 18 der Treibstoffhülse 14 geschehen, die der Montageöffnung M zugewandt ist. In die mit den tablettenförmigen Treibstoff 17 befüllte Treibstoffhülse 14 ist entlang der ersten Richtung R durch die erste Öffnung 18 der Treibstoffhülse 14 ein Volumenausgleichselement 19 eingeführt, welches elastisch verformbar ist. Das Volumenausgleichselement 19 kann beispielsweise in Form eines Metallfaservlieses vorliegen und dient dazu, einen nicht mit Treibstoff 17 befüllten Teil der Treibstoffhülse 14 derart auszufüllen, dass eine unkontrollierte Bewegung des tablettenförmigen Treibstoffes 17 entlang der ersten Richtung R unterdrückt wird.

Die Zündung des Treibstoffes 17 erfolgt durch die erste Öffnung 18 der Treibstoffhülse 14. Hierzu wird mittels eines Zünders 20 eine Hitze bereitgestellt, die den Treibstoff 17 entzündet, der dadurch zumindest teilsweise in ein Gas umgewandelt wird, das sich entlang der ersten Richtung R in der Treibstoffhülse 14 ausbreitet und an der zweiten Öffnung 15 der Treibstoffhülse 14 gegen den flächigen Bereich 13 des Prallelementes 10 strömt und dadurch verwirbelt wird. Benachbart zum flächigen Bereich 13 sind an der Treibstoffhülse 14 entlang einer die Treibstoffhülse 14 quer zur ersten Richtung R umlaufenden Umfangsrichtung Ausströmöffnungen 21 der Treibstoffhülse 14 ausgebildet, durch die das Gas aus der Treibstoffhülse 14 austreten kann, so dass es in ein Zwischenraum gelangen kann, der die Treibstoffhülse 14 umgibt und seinerseits von der Innenseite 2b des Mantels 2a des Gehäuses 2 umgeben ist. Von dort gelangt das Gas über Einströmöffnungen des Prallelementes 10, die an der Wandung 11 des Prallelementes 10 ausgebildet sind, in das Prallelement 10 und von dort durch die Aussparung 3a der Seitenwand 3 des Gehäuses 2 in den Gasaustrittskörper 6 des Gehäuses 2, der zum Ausströmen des Gases die erste und die zweite Ausströmöffnung 8, 9 in seiner Wandung 7 aufweist. Um die durch den Gasgenerator 1 freisetzbaren Gase in einen Gassack einzuleiten, werden diese beiden Ausströmöffnungen 8, 9 in geeigneter Weise mit einer Einströmöffnung des Gassackes verbunden, bzw. innerhalb eines mit Gas befüllbaren Innenraumes eines Gassackes angeordnet.

Zum Bereitstellen einer hinreichend großen Hitze, die zum Zünden des Treibstoffes 17 benötigt wird, ist eine Zünderkappe 21 vorgesehen, die eine Druckkammer 22 umgibt, in der ein Zündmittel 22a gelagert ist. Die Zündkammer 21 ist im Wesentlichen zylinderförmig ausgebildet und weist dementsprechend eine zylindermantelförmige Wandung 21a auf, die quer zur ersten Richtung R einen Außendurchmesser aufweist, der im Wesentlichen dem Innendurchmesser des Mantels 2a des Gehäuses 2 entspricht (quer zur ersten Richtung R), so dass die Wandung 21 a der Zündkammer 21 an der Innenseite 2b des Mantels 2a des Gehäuses 2 anliegt. Die Zünderkappe 21 verfügt über einen kreisförmigen Boden 21 b, der senkrecht zur ersten Richtung R orientiert ist und im Wesentlichen rechtwinklig von der Wandung 21a der Zünderkappe 21 abgeht. Der Boden 21b der Zünderkappe 21 ist in die erste Öffnung 18 der Treibstoffhülse 14 entlang der ersten Richtung R eingeführt und liegt an dem Volumenausgleichselement 19 an. Weiterhin stützt sich die Zünderkappe 21 mit ihrem Boden 21b an dem ersten Randbereich 18a der Treibstoffhülse 14 ab, der die erste Öffnung 18 der Treibstoffhülse 14 quer zur ersten Richtung R ringförmig umläuft.

In eine Öffnung 21c der Zünderkappe 21, die entlang der ersten Richtung R der Montageöffnung M des Gehäuses 2 des Gasgenerators 1 zugewandt ist, ist der Zünder 20 eingeführt, der zusammen mit der Zünderkappe 21 die Druckkammer 22 umgibt. Der Zünder 20 weist einen ersten und einen zweiten Anlagebereich 20a, 20b auf, die einander entlang der ersten Richtung R abgewandt sind und den im Wesentlichen zylinderförmigen Zünder 20 quer zur ersten Richtung R ringförmig umlaufen. Hierbei ist der zweite Anlagebereich 20b des Zünders 20 entlang der ersten Richtung R der Zünderkappe 21 zugewandt und liegt deckungsgleich an einem Anlagebereich 21d der Zünderkappe 21 an, der entlang der ersten Richtung R deformierbar ausgebildet ist.

Damit der Zünder 20 beim Einführen eines freien Endbereiches 20c des Zünders 20, der entlang der ersten Richtung R von dem zweiten Anlagebereich 20b des Zünders 20 absteht, quer zur ersten Richtung R in der Öffnung 21c der Zünderkappe 21 zentriert wird, ist der Anlagebereich 21d der Zünderkappe 21 bezüglich der ersten Richtung R geneigt, d.h., der Anlagebereich 21d der Zünderkappe 21 ist trichterförmig ausgebildet.

Zum gasdichten Verschließen der Druckkammer 22, wird der Zünder 20 mittels eines in der Montageöffnung M angeordneten Abdichtelementes 23 entlang der ersten Richtung R gegen die Zünderkappe 21 gedrückt, so dass der entlang der ersten Richtung R flexibel ausgebildete Anlagebereich 21d der Zünderkappe 21, der die Öffnung 21c der Zünderkappe 21 quer zur ersten Richtung R ringförmig umläuft, entlang der ersten Richtung R deformiert wird und somit abdichtend an dem zweiten Anlagebereich 20b des Zünders 20 anliegt.

Zum Zünden des Zündmittels 22a, welches in der Druckkammer 22 angeordnet ist, wird der Zünder 20 über einen Kontaktbereich 20d aktiviert und entzündet daraufhin das Zündmittel 22a. Dieses erzeugt ein heißes Zündgas, das in der Druckkammer 22 verdichtet wird, bis der Gasdruck des Zündgases ausreicht, einen Aufreißbereich 21 e des Bodens 21 b der Zünderkappe 21 aufzusprengen, so dass das heiße Zündgas durch das Volumenausgleichselement 19 entlang der ersten Richtung R diffundieren kann, um den in der Treibstoffhülse 14 angeordneten Treibstoff 17 zu entzünden.

Damit der Kontaktbereich 20d des Zünders 20 vom Außenraum A des Gasgenerators 1 her kontaktierbar ist, ist an dem Abdichtelement 23, welches zum Abdichten der Montageöffnung M in der Montageöffnung M angeordnet ist, eine Aussparung 23a vorgesehen, durch die der Kontaktbereich 20d des Zünders 20 in den den Gasgenerator 1 umgebenden Außenraum A geführt ist.

Die Aussparung 23a des Abdichtelementes 23 wird von einem Anlagebereich 23b des Abdichtelementes 23 quer zur ersten Richtung R ringförmig umlaufen, wobei der Anlagebereich 23b des Abdichtelementes 23 entlang der ersten Richtung R deformierbar ausgebildet ist und mit einer Kraft F entlang der ersten Richtung R gegen den ersten Anlagebereich 20a des Zünders 20 drückt und abdichtend an diesem anliegt. Hierdurch wird eine gasdichte Verbindung zwischen dem Abdichtelement 23 und dem Zünder 20 geschaffen, so dass kein im Gasgenerator 1 erzeugtes Gas zwischen dem Zünder 20 und dem Abdichtelement 23 in den Außenraum A des Gasgenerators 1 gelangen kann.

Das im Wesentlichen zylinderförmige Abdichtelement 23 ist mit einem die Montageöffnung M umlaufenden Randbereich 24 des Mantels 2a des Gehäuses 2 des Gasgenerators 1 formschlüssig verklemmt, und zwar vorzugsweise durch Umformen (Verkrimpen) eines die Montageöffnung M begrenzenden Teiles des Gehäuses 2, der jenen Bereich 24 umfasst. Diese formschlüssige Verbindung zwischen dem Abdichtelement 23 und dem Mantel 2a des Gehäuses 2 ist derart ausgebildet, dass das Abdichtelement 23 entlang der ersten Richtung R mit der Kraft F gegen den Zünder 20, und zwar dessen ersten Anlagebereich 20a drückt. Hierdurch drückt der Zünder 20 mit der Kraft F mit seinem zweiten Anlagebereich 20b gegen den Anlagebereich 21d der Zünderkappe 21, so dass die Kraft F in die Wandung 21a der Zünderkappe 21 eingeleitet wird. Da sich die Zünderkappe 21 entlang der ersten Richtung R an dem ersten Randbereich 18a der Treibstoffhülse 14 abstützt, wird die Kraft F über den ersten Randbereich 18a in die Treibstoffhülse 14 entlang der ersten Richtung R eingeleitet und von dort über die Stufe 11a des Prallelementes 10 auf das Prallelement 10 übertragen, und zwar auf dessen Wandung 11, über die die Kraft F in die Seitenwand 3 einleitet wird, die der Montageöffnung M entlang der ersten Richtung R gegenüberliegt.

Es ist hierbei vorteilhaft, die Treibstoffhülse 14 derart steif auszubilden, dass sie durch die Kraft F entlang der ersten Richtung R nicht zusammengedrückt bzw. gestaucht wird. Hierdurch wird sichergestellt, dass trotz einer hohen Kraft F, mit der das Abdichtelement 23 gegen den Zünder 20 drückt, der in der Treibstoffhülse 14 angeordnete Treibstoff 17 entlang der ersten Richtung R keinem dauerhaften Druck (entlang der ersten Richtung R) ausgesetzt ist.

Dadurch, dass das Abdichtelement 23 derart in die Montageöffnung M eingesetzt ist, dass es mit der Kraft F entlang der ersten Richtung R gegen den Zünder 20 drückt, wird auf einfache Art und Weise eine gasdichte Verbindung sowohl zwischen dem Zünder 20 und dem Abdichtelement 23, als auch zwischen dem Zünder 20 und der Zünderkappe 21 (zur Ausbildung der gasdichten Druckkammer 22) geschaffen. Eine Deformation des Anlagebereiches 23b des Abdichtelementes 23 und des Anlagebereiches 21d der Zünderkappe 21 entlang der ersten Richtung R kann durch die Breite eines Spaltes 26 bestimmt werden, der entlang der ersten Richtung R zwischen dem Abdichtelement 23 und der Zünderkappe 21 ausgebildet ist, bevor die beiden Anlagebereiche 23b, 21d entlang der ersten Richtung R zur Ausbildung einer gasdichten Verbindung deformiert werden. Durch Drücken des Abdichtelementes 23 entlang der ersten Richtung R gegen den Zünder 20 (und somit des Zünders 20 gegen die Zünderkappe 21) schließt sich der Spalt 26, so dass eine der Zünderkappe 21 zugewandte Seite des Abdichtelementes 23 gegen eine der Seite des Abdichtelementes 23 zugewandte Seite der Zünderkappe 21 drückt. Hierdurch wird die Deformation der beiden Anlagebereiche 23b, 21d entlang der ersten Richtung R begrenzt. Oder anders gesagt, die Deformation der beiden Anlagebereiche 23b, 21d entlang der ersten Richtung ist über die Breite des Spaltes 26 einstellbar.

Durch die vorstehenden Maßnahmen kann bei der Herstellung eines solchen Gasgenerators 1 der kostenintensive Schritt vermieden werden, bei dem das Abdichtelement 23 außerhalb des Innenraumes I des Gehäuses 2 des Gasgenerators 1 mit dem Zünder 20 gasdicht verklemmt wird. Nachteilig an einem solchen Verfahrensschritt ist insbesondere, dass das Abdichtelement 23 zum gasdichten Verklemmen mit dem Zünder 20 eine umlaufende Wandung aufweisen muss, die den Zünder 20 umgreifen kann. Dies bedingt, dass das Abdichtelement 23 eine komplexe geometrische Außenkontur mit großen Wanddickensprüngen aufweisen muss, was sich Kosten steigernd auswirkt.

Zum Verklemmen des Abdichtelementes 23 mit dem Gehäuse 2, weist der Mantel 2a des Gehäuses 2 einen die Montageöffnung M insbesondere ringförmig umlaufenden Bereich 24 auf, der quer zur ersten Richtung R von der Innenseite 2b des Mantels 2a des Gehäuses 2 in den Innenraum I des Gehäuses 2 absteht und in eine Ausnehmung, insbesondere eine Nut 25 des Abdichtelementes 23 formschlüssig eingreifen kann, die das Abdichtelement 23 entlang einer das Abdichtelement 23 quer zur ersten Richtung R umlaufenden Umfangsrichtung umläuft. D. h., zum Anordnen des Abdichtelementes 23 in der Montageöffnung M muss dieses entlang der ersten Richtung R in die Montageöffnung M eingeführt werden, bis der Bereich 24 formschlüssig in die Nut 25 des Abdichtelementes 23 eingreifen kann. Hierzu kann die Montageöffnung M bzw. der die Montageöffnung berandende Teil geeignet aufgeweitet sein. Nach dem Einsetzen des Abdichtelementes 23 wird das Gehäuse 2 an jenem Teil des Gehäuses umgeformt, so dass der Bereich 24 in die Ausnehmung (Nut) 25 eingreift. Die Ausdehnung des Abdichtelementes 23 entlang der ersten Richtung R ist dabei derart bemessen, dass das Abdichtelement 23 sobald es mit seiner Nut 25 in den Bereich 24 eingerastet ist bzw. in diesen eingreift, mit der Kraft F gegen den Zünder 20 drückt.

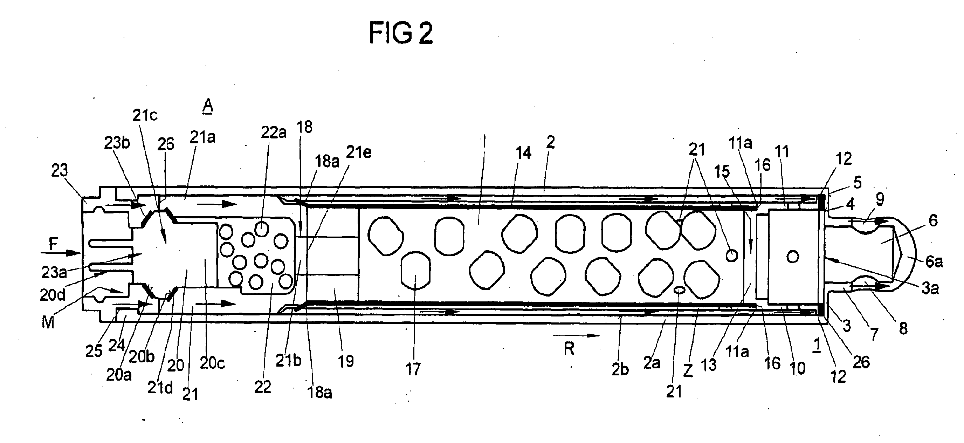

Figur 2 zeigt eine Abwandlung des in der Figur 1 gezeigten Gasgenerators 1, bei dem zusätzlich zwischen dem ersten Prallelement 10 und der Seitenwand 3 des Gehäuses 2 des Gasgenerators 1 entlang der ersten Richtung R ein Federelement 26 angeordnet ist, das entlang der ersten Richtung R elastisch komprimierbar ist. Das Federelement 26 kann einstückig mit dem Prallelement 10 ausgebildet sein bzw. das Prallelement 10 kann selbst als ein solches Federelement ausgebildet sein. Das Federelement 26 ist derart zwischen dem Prallelement 10 und der Seitenwand 3 des Gehäuses 2 angeordnet, dass es entlang der ersten Richtung R durch die durch das Abdichtelement 23 ausgeübte, Kraft F, deren Betrag vordefinierbar ist, entlang der ersten Richtung R komprimiert wird.

Hierzu sind die Zünderkappe 21, sowie die Treibstoffhülse 14 und das Prallelement 10 entlang der ersten Richtung R beweglich in dem Gehäuse 2 des Gasgenerators 1 gelagert, so dass die Kraft F, mit der das Abdichtelement 23 gegen den Zünder 20 drückt, über die Zünderkappe 21, die Treibstoffhülse 14 und das Prallelement 10 auf das Federelement 26 übertragbar ist. Das Federelement 26 bedingt den zusätzlichen Vorteil, dass die Kraft F, mit der das Abdichtelement 23 gegen den Zünder 20 drückt, bzw. der Zünder 20 gegen die Zünderkappe 21 drückt, durch die Wahl der Rückstellkraft des Federelementes 26, an die Rückstellkräfte und geometrischen Ausmaße des Anlagebereiches 23b des Abdichtelementes 23 und des Anlagebereiches 21d der Zünderkappe 21 angepasst werden kann, d.h., auf einen vorbestimmbaren Betrag einstellbar ist.

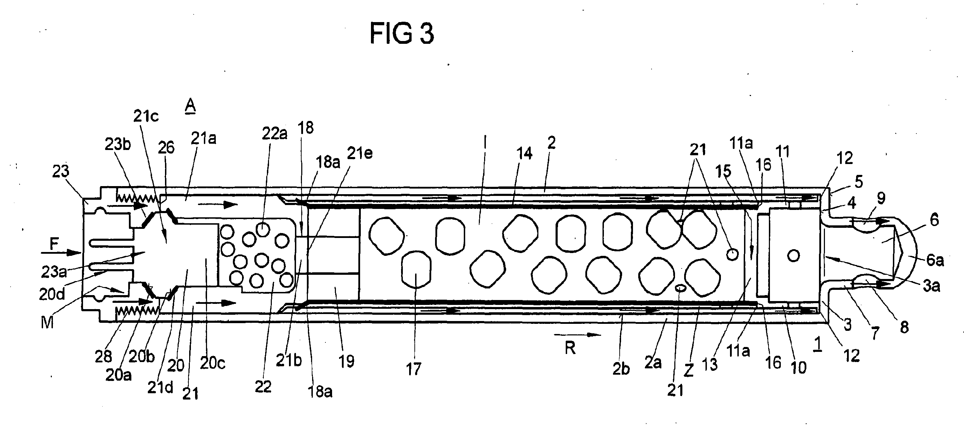

Figur 3 zeigt eine weitere Abwandlung des in der Figur 1 gezeigten Gasgenerators 1, bei dem im Unterschied zur Figur 1 das Abdichtelement 23 nicht mit dem Gehäuse 2 des Gasgenerators 1 formschlüssig verklemmt ist, sondern in die Montageöffnung M des Gehäuses 2 eingeschraubt ist. Hierzu weist das Gehäuse 2 an einem die Montageöffnung M umlaufenden Randbereich 28, der den Innenraum I des Gehäuses 2 zugewandt ist, ein Gewinde auf, in das ein Gewinde des Abdichtelementes 23 eingreift. Hierdurch kann auf vorteilhafte Weise die Kraft F, mit der das Abdichtelement 23 entlang der ersten Richtung R gegen den Zünder 20 drückt, je nach Einschraubtiefe des Abdichtelementes 23 entlang der ersten Richtung variabel eingestellt werden, so dass das in der Figur 2 gezeigte Federelement 26 nicht notwendig ist. Zum Verhindern eines Verdrehens des Abdichtelementes 23, weist das Abdichtelement 23 ein nicht gezeigtes Feststellelement auf, mit dessen Hilfe eine vordefinierbare Einschraubtiefe des Abdichtelementes 23 entlang der ersten Richtung R betriebssicher feststellbar ist.

## Patentansprüche

1. Verfahren zur Herstellung eines Gasgenerators, mit den folgenden Schritten:
- Anordnen eines Zünders (20) in einem von einem Gehäuse (2) des herzustellenden Gasgenerators (1) umgebenen Innenraum (I) derart, dass sich der Zünder (2) entlang einer ersten Richtung (R) an einem Teil (21) des Gasgenerators (1) abstützt und entlang der ersten Richtung (R) einer Montageöffnung (M) des Gehäuses (2) gegenüberliegt, und
- Anordnen eines Abdichtelementes (23) in der Montageöffnung (M) des Gehäuses (2) zum Abdichten der Montageöffnung (M) derart, dass das Abdichtelement (23) über einen entlang der ersten Richtung (R) deformierbaren Anlagebereich (23b) mit einer entlang der ersten Richtung (R) wirkenden Kraft (F) gegen einen ersten Anlagebereich (20a) des Zünders (20) drückt, so dass eine gasdichte Verbindung zwischen dem Abdichtelement (23) und dem Zünder (20) gebildet wird,
- wobei die Deformation des Anlagebereiches (23b) des Abdichtelementes (23) entlang der ersten Richtung (R) **dadurch** begrenzt wird, dass eine dem Teil (21) des Gasgenerators (1) entlang der ersten Richtung (R) zugewandte Seite des Abdichtelementes (23) gegen eine Seite jenes Teiles (21) des Gasgenerators (1) stößt.

2. Verfahren nach Anspruch 1, **dadurch gekennzeichnet, dass** das Abdichtelement (23) derart bezüglich des Zünders (20) angeordnet wird, dass eine Aussparung (23a) des Abdichtelementes (23) den Zünder (20) zumindest abschnittsweise umgibt.

3. Verfahren nach Anspruch 2, **dadurch gekennzeichnet, dass** ein Kontaktbereich (20d) des Zünders (20), über den der Zünder (20) aktivierbar ist, durch die Aussparung (23a) des Abdichtelementes (23) geführt wird, so dass der Kontaktbereich (20d) vom Außenraum des Gehäuses (2) her zugänglich ist, nachdem das Abdichtelement (23) in der Montageöffnung (M) angeordnet worden ist.

4. Verfahren nach Anspruch 2 oder 3, **dadurch gekennzeichnet, dass** das Abdichtelement (23) derart in der Montageöffnung (M) angeordnet wird, dass ein die Aussparung (23a) des Abdichtelementes (23) umlaufender Anlagebereich (23b) des Abdichtelementes (23) zur Ausbildung der gasdichten Verbindung durch die entlang der ersten Richtung (R) wirkende Kraft (F) gegen einen ersten Anlagebereich (20a) des Zünders (20) gedrückt wird.

5. Verfahren nach Anspruch 4, **dadurch gekennzeichnet, dass** der Anlagebereich (23b) des Abdichtelementes (23) und der erste Anlagebereich (20a) des Zünders (20) entlang der ersten Richtung (R) durch die Kraft (F) derart deformiert werden, dass die beiden Anlagebereiche (23b, 20a) zur Ausbildung der gasdichten Verbindung abdichtend aneinander anliegen.

6. Verfahren nach einem der vorangegangenen Ansprüche, **gekennzeichnet durch** ein Anordnen einer Zünderkappe (21) im Innenraum (I) des Gehäuses (2) derart, dass sich die Zünderkappe (21) entlang der ersten Richtung (R) an einem im Innenraum
(I) befindlichen Teil (14) des Gasgenerators (1) abstützen kann.

7. Verfahren nach Anspruch 5 und 6, **dadurch gekennzeichnet, dass** die Deformation des Anlagebereiches (23b) des Abdichtelementes (23) und des ersten Anlagebereiches (20a) des Zünders (20) entlang der ersten Richtung (R) **dadurch** begrenzt wird, dass eine der Zünderkappe (21) entlang der ersten Richtung (R) zugewandten Seite des Abdichtelementes (23) gegen eine dem Abdichtelementes (23) entlang der ersten Richtung zugewandten Seite der Zünderkappe (21) stößt.

8. Verfahren nach Anspruch 6 oder 7, **dadurch gekennzeichnet, dass** die Zünderkappe (21) derart im Innenraum (I) des Gehäuses (2) angeordnet wird, dass eine Öffnung (21c) der Zünderkappe (21) entlang der ersten Richtung (R) der Montageöffnung (M) des Gehäuses (2) zugewandt ist.

9. Verfahren nach einem der vorangegangenen Ansprüche, **dadurch gekennzeichnet, dass** das Abdichtelement (23) außerhalb des Innenraumes (I) des Gehäuses (2) mit dem Zünder (20) zu einem Untermodul vormontiert wird.

10. Verfahren nach Anspruch 9, **dadurch gekennzeichnet, dass** das Untermodul zum Anordnen des Abdichtelementes (23) in der Montageöffnung (M) mit dem Zünder (20) voran entlang der ersten Richtung (R) durch die Montageöffnung (M) in das Gehäuse (2) eingeführt wird.

11. Verfahren nach Anspruch 8 oder Anspruch 9 oder 10, soweit rückbezogen auf Anspruch 8, **dadurch gekennzeichnet, dass** der Zünder (20) derart im Innenraum
(I) des Gasgenerators (1) angeordnet wird, dass er die Öffnung (21c) der Zünderkappe (21) zur Ausbildung einer Druckkammer (22) des Gasgenerators (1) abdeckt.

12. Verfahren nach Anspruch 11, **dadurch gekennzeichnet, dass** der Zünder (20) mit einem freien Endabschnitt (20c) entlang der ersten Richtung (R) in die Öffnung (21c) der Zünderkappe (21) eingeführt wird, wobei der Zünder (20) quer zur ersten Richtung (R) positioniert wird.

13. Verfahren nach Anspruch 11 oder 12, **dadurch gekennzeichnet, dass** das Abdichtelement (23) derart in der Montageöffnung (M) angeordnet wird, dass der Zünder (20) zum gasdichten Verschließen der Druckkammer (22) mit einem zweiten Anlagebereich (20b) durch die entlang der ersten Richtung (R) wirkenden Kraft (F) gegen einen die Öffnung (21c) der Zünderkappe (21) umlaufenden Anlagebereich (21 d) der Zünderkappe (21) gedrückt wird.

14. Verfahren nach Anspruch 13, **dadurch gekennzeichnet, dass** der zweite Anlagebereich (20b) des Zünders (20) und/oder der Anlagebereich (21d) der Zünderkappe (21) entlang der ersten Richtung (R) durch die Kraft (F) derart deformiert wird, dass die beiden Anlagebereiche (20b, 21d) zum gasdichten Verschließen der Druckkammer (22) abdichtend aneinander anliegen.

15. Verfahren nach Anspruch 14, **dadurch gekennzeichnet, dass** die Deformation des zweiten Anlagebereiches (20b) des Zünders (20) und/oder des Anlagebereiches (21d) der Zünderkappe (21) entlang der ersten Richtung (R) **dadurch** begrenzt wird, dass eine der Zünderkappe (21) entlang der ersten Richtung (R) zugewandten Seite des Abdichtelementes (23) gegen eine dem Abdichtelementes (23) entlang der ersten Richtung zugewandten Seite der Zünderkappe (21) stößt.

16. Verfahren nach einem der vorangegangenen Ansprüche, **dadurch gekennzeichnet**, das ein Prallelement (10) zur Verwirbelung der mittels des herzustellenden Gasgenerators (1) freisetzbaren Gase im Innenraum (I) des Gehäuses (2) derart angeordnet wird, dass sich das Prallelement (10) an einer der Montageöffnung (M) entlang der ersten Richtung (R) zugewandten Innenseite (4) des Gehäuses (2) abstützen kann.

17. Verfahren nach Anspruch 16, **dadurch gekennzeichnet, dass** entlang der ersten Richtung (R) zwischen der Innenseite (4) und dem Prallelement (10) eine Federelement (26) angeordnet wird, welches entlang der ersten Richtung (R) elastisch verformbar ist.

18. Verfahren nach Anspruche 16 oder 17, **dadurch gekennzeichnet, dass** eine Treibstoffhülse (14) im Innenraum (I) des Gehäuses des Gasgenerators (1) derart angeordnet wird, dass sich die Treibstoffhülse (14) mit einem dem Prallelement (10) entlang der ersten Richtung (R) gegenüberliegenden zweiten Randbereich (16) an dem Prallelement (10) abstützen kann.

19. Verfahren nach Anspruch 18, **dadurch gekennzeichnet, dass** die Treibstoffhülse (14) mit einem Treibstoff (17) befüllt wird.

20. Verfahren nach Anspruch 18 oder 19, **dadurch gekennzeichnet, dass** entlang der ersten Richtung (R) ein elastisch verformbares Volumenausgleichselement (19) in die Treibstoffhülse (14) eingeführt wird.

21. Verfahren nach Anspruch 16 oder 17 und einem der Ansprüche 18 bis 20, **dadurch gekennzeichnet, dass** das Abdichtelement (23) derart in der Montageöffnung (M) angeordnet wird, dass die durch das Abdichtelement (23) auf den Zünder (20) ausgeübte Kraft (F) über die Treibstoffhülse (14) und das Prallelement (10) in das Gehäuse (2) eingeleitet wird.

22. Verfahren nach Anspruch 17 und 21, **dadurch gekennzeichnet, dass** das Abdichtelement (23) derart in der Montageöffnung (M) angeordnet wird, dass das Federelement (26) durch die Kraft (F) entlang der ersten Richtung (R) deformiert wird.

23. Verfahren nach einem der vorangegangenen Ansprüche, **dadurch gekennzeichnet, dass** das Abdichtelement (23) mit einem die Montageöffnung (M) umlaufenden Bereich (24) des Gehäuses (2) formschlüssig verklemmt wird, wodurch die entlang der ersten Richtung (R) wirkende Kraft (F) erzeugt wird.

24. Verfahren nach Anspruch 23, **dadurch gekennzeichnet, dass** das Abdichtelement (23) derart mit dem Gehäuse (2) verklemmt wird, dass der Bereich (24) quer zur ersten Richtung (R) in einen vom Gehäuse (2) umgebenen Innenraum (I) abragt und quer zur ersten Richtung (R) in eine Ausnehmung; insbesondere eine Nut (25), des Abdichtelementes (23) eingreift.

25. Verfahren nach einem der Ansprüche 1 bis 22, **dadurch gekennzeichnet, dass** das Abdichtelement (23) in die Montageöffnung (M) geschraubt wird, wodurch die entlang der ersten Richtung (R) wirkende Kraft (F) erzeugt wird.

26. Gasgenerator mit:
- einem Gehäuse (2), das einen Innenraum (I) des Gasgenerators (1) umgibt,
- einem Zünder (20) zum Zünden des Gasgenerators (1), so dass der Gasgenerator (1) ein Gas erzeugt, wobei sich der Zünder (20) entlang einer ersten Richtung (R) an einem Teil (21) des Gasgenerators (1) abstützt,
- einer Montageöffnung (M) des Gehäuses (2), durch die bei der Montage des Gasgenerators (1) Komponenten des Gasgenerators (1) in den Innenraum (I) des Gasgenerators (1) eingeführt werden können, und
- einem Abdichtelement (23) zum Abdichten der Montageöffnung (M), das derart in der Montageöffnung (M) angeordnet ist, dass es über einen entlang der ersten Richtung (R) deformierbaren Anlagebereich (23b) mit einer entlang der ersten Richtung (R) wirkenden Kraft (F) gegen einen ersten Anlagebereich (20a) des Zünders (20) drückt,
**dadurch gekennzeichnet,**
**dass** zwischen dem Abdichtelement (23) und dem Teil (21) des Gasgenerators (1) ein Spalt (26) ausgebildet ist, wenn sich die beiden Anlagebereiche (23b, 20a) beim Annähern entlang der ersten Richtung (R) gerade flächig berühren, und dass der Spalt (26) beim Anordnen des Abdichtelementes (23) in der Montageöffnung (M) durch Drücken des Abdichtelementes (23) entlang der ersten Richtung (R) in Richtung auf den ersten Anlagebereich (20a) verschließbar ist, so dass die Deformation des Anlagebereiches (23b) des Abdichtelementes (23) entlang der ersten Richtung (R) begrenzt wird.

27. Gasgenerator nach Anspruch 26, **dadurch gekennzeichnet, dass** das Abdichtelement (23) eine Aussparung (23a) zur Aufnahme eines Kontaktbereiches (20d) des Zünders (20) aufweist, über den der Zünder (20) aktivierbar ist.

28. Gasgenerator nach Anspruch 26 und 27, **dadurch gekennzeichnet, dass** der Anlagebereich (23b) des Abdichtelementes (23) die Aussparung (23a) quer zur ersten Richtung (R) ringförmig umläuft.

29. Gasgenerator nach einem der Ansprüche 26 bis 28, **dadurch gekennzeichnet, dass** der Anlagebereich (23b) des Abdichtelementes (23) und/oder der erste Anlagebereich (20a) des Zünders (20) als ein entlang der ersten Richtung (R) deformierbares erstes Dichtungselement ausgebildet ist, dass durch das gegen den Zünder (20) drückende Abdichtelement (23) derart entlang der ersten Richtung (R) deformiert ist, dass die beiden Anlagebereiche (23b, 20a) abdichtend aneinander anliegen.

30. Gasgenerator nach Anspruch 29, **dadurch gekennzeichnet, dass** der Spalt (26) beim Anordnen des Abdichtelementes (23) in der Montageöffnung (M) durch Drücken des Abdichtelementes (23) entlang der ersten Richtung (R) verschließbar ist, so dass die Deformation des ersten Dichtungselementes entlang der ersten Richtung (R) begrenzt wird.

31. Gasgenerator nach einem der Ansprüche 26 bis 30, **dadurch gekennzeichnet, dass** das Abdichtelement (23) zusammen mit dem Zünder (20) die Montageöffnung (M) gasdicht verschließt.

32. Gasgenerator nach einem der Ansprüche 26 bis 31, **dadurch gekennzeichnet, dass** das Abdichtelement (23) und der Zünder (20) ein vormontiertes Untermodul bilden.

33. Gasgenerator nach einem der Ansprüche 26 bis 32, **dadurch gekennzeichnet, dass** der Teil des Gasgenerators (1), an dem sich der Zünder (20) abstützt, als eine Zünderkappe (21) ausgebildet ist, die eine Druckkammer (22) des Gasgenerators (1) umgibt.

34. Gasgenerator nach Anspruch 33, **dadurch gekennzeichnet, dass** die Zünderkappe (21) eine Öffnung (21 a) aufweist, die entlang der ersten Richtung (R) der Montageöffnung (M) gegenüberliegt.

35. Gasgenerator nach Anspruch 34, **dadurch gekennzeichnet, dass** die Öffnung (21 c) der Zünderkappe (21) von einem Anlagebereich (21d) der Zünderkappe (21) berandet wird, der die Öffnung (21 c) ringförmig umläuft.

36. Gasgenerator nach Anspruch 35, **dadurch gekennzeichnet, dass** der Anlagebereich (21d) der Zünderkappe (21) zur Positionierung des Zünders (20) bezüglich der Zünderkappe (21) in einer senkrecht zur ersten Richtung (R) orientierten Ebene trichterförmig ausgebildet ist.

37. Gasgenerator Anspruch 35 oder 36, **dadurch gekennzeichnet, dass** das Abdichtelement (23) derart in der Montageöffnung (M) angeordnet ist, dass es den Zünder (20) mit einem zweiten Anlagebereich (20b) zum gasdichten Verschließen der Druckkammer (22) mit der entlang der ersten Richtung (R) wirkenden Kraft (F) gegen den Anlagebereich (21d) der Zünderkappe (21) drückt.

38. Gasgenerator Anspruch 37, **dadurch gekennzeichnet, dass** der zweite Anlagebereich (20b) des Zünders (20) und/oder der Anlagebereich (21 d) der Zünderkappe (21) als ein entlang der ersten Richtung (R) deformierbares zweites Dichtungselement ausgebildet ist, das entlang der ersten Richtung (R) derart deformiert ist, dass die beiden Anlagebereiche (20b, 21d) abdichtend aneinander anliegen.

39. Gasgenerator nach Anspruch 38, **dadurch gekennzeichnet, dass** zwischen dem Abdichtelement (23) und der Zünderkappe (21) entlang der ersten Richtung (R) ein den Zünder (20) umlaufender Spalt (26) ausgebildet ist, wenn sich die beiden Anlagebereiche (20b, 21d) beim Annähern entlang der ersten Richtung (R) gerade einander flächig berühren, und dass der Spalt (26) beim Anordnen des Abdichtelementes (23) in der Montageöffnung (M) durch Drücken des Abdichtelementes (23) entlang der ersten Richtung (R) verschließbar ist, so dass die Deformation des zweiten Dichtungselementes entlang der ersten Richtung (R) begrenzt wird.

40. Gasgenerator nach einem der Ansprüche 26 bis 39, **dadurch gekennzeichnet, dass** der Gasgenerator (1) eine mit Treibstoff (17) befüllte Treibstoffhülse (14) aufweist, die sich im Innenraum (I) des Gehäuses (2) entlang der ersten Richtung (R) erstreckt.

41. Gasgenerator nach Anspruch 40, **dadurch gekennzeichnet, dass** entlang der ersten Richtung (R) ein Volumenausgleichselement (19) in die Treibstoffhülse (14) eingeführt ist, welches entlang der ersten Richtung (R) derart gegen den Treibstoff (17) drückt, dass eine Bewegung des Treibstoffes (17) in der Treibstoffhülse (14) unterdrückt wird.

42. Gasgenerator nach Anspruch 40 oder 41, **dadurch gekennzeichnet, dass** die Treibstoffhülse (14) eine erste Öffnung (18) aufweist, die entlang der ersten Richtung (R) der Montageöffnung (M) gegenüberliegt.

43. Gasgenerator nach Anspruch 42, **dadurch gekennzeichnet, dass** die erste Öffnung (18) der Treibstoffhülse (14) von einem ersten Randbereich (18a) der Treibstoffhülse (14) berandet wird.

44. Gasgenerator nach einem der Ansprüche 33 bis 39 und einem der Ansprüche 40 bis 43, **dadurch gekennzeichnet, dass** sich die Zünderkappe (21) entlang der ersten Richtung (R) am ersten Randbereich (18a) der Treibstoffhülse (14) abstützt, so dass die Kraft (F), die das Abdichtelement (23) entlang der ersten Richtung (R) auf den Zünder (20) ausübt, über die Treibstoffhülse (14) in das Gehäuse (2) eingeleitet wird.

45. Gasgenerator nach Anspruch 40 bis 44, **dadurch gekennzeichnet, dass** die Treibstoffhülse (14) eine zweite Öffnung (15) aufweist, die der ersten Öffnung (18) entlang der ersten Richtung (R) gegenüberliegt.

46. Gasgenerator nach Anspruch 45, **dadurch gekennzeichnet, dass** sich die Treibstoffhülse (14) mit einem zweiten Randbereich (16), der die zweite Öffnung (15) berandet, an einem Prallelement (10) abstützt, das entlang der ersten Richtung (R) zwischen der Treibstoffhülse (14) und einer der Montageöffnung (M) zugewandten Innenseite (4) angeordnet ist, wobei das Prallelement (10) zur Verwirbelung der in der Treibstoffhülse (14) erzeugbaren Gase dient.

47. Gasgenerator nach Anspruch 46, **dadurch gekennzeichnet, dass** das Prallelement (10) einen flächigen Bereich (13) aufweist, der sich quer zur ersten Richtung (R) erstreckt und die zweite Öffnung (15) der Treibstoffhülse (14) verschließt.

48. Gasgenerator nach Anspruch 46 oder 47, **dadurch gekennzeichnet, dass** sich das Prallelement (10) entlang der ersten Richtung (R) an der Innenseite des Gehäuses (2) abstützt, so dass die Kraft (F), die das Abdichtelement (23) auf den Zünder (20) ausübt, über das Prallelement (10) in das Gehäuse (2) eingeleitet wird.

49. Gasgenerator nach einem der Ansprüche 46 bis 48, **dadurch gekennzeichnet, dass** sich das Prallelement (10) entlang der ersten Richtung (R) an einem Federelement (26) abstützt, das zur Aufnahme der Kraft (F), die das Abdichtelement (23) auf den Zünder (20) ausübt, entlang der ersten Richtung (R) zwischen der Innenseite (4) und dem Prallelement (10) angeordnet ist.

50. Gasgenerator nach einem der Ansprüche 26 bis 49, **dadurch gekennzeichnet, dass** das Abdichtelement (23) derart mit einem Bereich (24) des Gehäuses (2) verklemmt ist, dass das Abdichtelement (23) mit der entlang der ersten Richtung (R) wirkenden Kraft (F) gegen den Zünder (20) drückt.

51. Gasgenerator nach Anspruch 50, **dadurch gekennzeichnet, dass** der Bereich (24) das Abdichtelement (23) umläuft.

52. Gasgenerator nach einem der Ansprüche 50 oder 51, **dadurch gekennzeichnet, dass** der Bereich (24) quer zur ersten Richtung (R) in einen vom Gehäuse (2) umgebenen Innenraum (I) abragt.

53. Gasgenerator nach einem der Ansprüche 50 bis 52, **dadurch gekennzeichnet, dass** der Bereich (24) quer zur ersten Richtung (R) in eine Ausnehmung (25), die insbesondere als eine das Abdichtelement (23) umlaufende Nut ausgebildet ist, eingreift.

54. Gasgenerator nach einem der Ansprüche 26 bis 49, **dadurch gekennzeichnet, dass** das Abdichtelement (23) derart in die Montageöffnung (M) geschraubt ist, dass das Abdichtelement (23) mit der entlang der ersten Richtung (R) wirkenden Kraft (F) gegen den Zünder (20) drückt.

## Claims

1. A method of producing a gas generator, having the following steps:
- arranging an igniter (20) in an inner chamber (I) surrounded by a housing (2) of the gas generator (1) to be produced in such a way that the igniter (2) may be supported in a first direction (R) on a part (21) of the gas generator (1) and in the first direction (R) is opposite a mounting orifice (M) of the housing (2), and
- arranging a sealing element (23) in the mounting orifice (M) of the housing (2) in such a way, to seal the mounting orifice (M), that the sealing element (23) presses over a bearing area (23b) deformable in the first direction (R) with a force (F) acting in the first direction (R) against a first bearing area (20a) of the igniter (20), such that a gas-tight joint is formed between the sealing element (23) and the igniter (20),
- deformation of the bearing area (23b) of the sealing element (23) in the first direction (R) being limited in that a side of the sealing element (23) facing the part (21) of the gas generator (1) in the first direction (R) abuts against a side of that part (21) of the gas generator (1).

2. The method as claimed in claim 1, **characterized in that** the sealing element (23) is arranged in such a way relative to the igniter (20) that an opening (23a) in the sealing element (23) surrounds the igniter (20) at least in sections.

3. The method as claimed in claim 2, **characterized in that** a contact zone (20d) of the igniter (20), by means of which the igniter (20) is activatable, is guided through the opening (23a) in the sealing element (23), such that the contact zone (20d) is accessible from the outer chamber of the housing (2) once the sealing element (23) has been arranged in the mounting orifice (M).

4. The method as claimed in claim 2 or 3, **characterized in that** the sealing element (23) is arranged in the mounting orifice (M) in such a way that a bearing area (23b) of the sealing element (23) surrounding the opening (23a) in the sealing element (23) is pressed, to form the gas-tight joint, by the force (F) acting in the first direction (R) against a first bearing area (20a) of the igniter (20).

5. The method as claimed in claim 4, **characterized in that** the bearing area (23b) of the sealing element (23) and the first bearing area (20a) of the igniter (20) are deformed in the first direction (R) by the force (F) in such a way that the two bearing areas (23b, 20a) rest sealingly against one another to form the gas-tight joint.

6. The method as claimed in one of the preceding claims, **characterized by** arranging an igniter cap (21) in the inner chamber (I) of the housing (2) in such a way that the igniter cap (21) may be supported in the first direction (R) against a part (14) of the gas generator (1) located in the inner chamber (I).

7. The method as claimed in claims 5 and 6, **characterized in that** deformation of the bearing area (23b) of the sealing element (23) and of the first bearing area (20a) of the igniter (20) in the first direction (R) is limited **in that** a side of the sealing element (23) facing the igniter cap (21) in the first direction (R) abuts against a side of the igniter cap (21) facing the sealing element (23) in the first direction.

8. The method as claimed in claim 6 or 7, **characterized in that** the igniter cap (21) is arranged in the inner chamber (I) of the housing (2) in such a way that an orifice (21c) of the igniter cap (21) faces the mounting orifice (M) of the housing (2) in the first direction (R).

9. The method as claimed in one of the preceding claims, **characterized in that** the sealing element (23) is preassembled with the igniter (20) outside the inner chamber (I) of the housing (2) to form a sub-module.

10. The method as claimed in claim 9, **characterized in that** the sub-module is introduced with the igniter (20) at the front in the first direction (R) into the housing (2) through the mounting orifice (M) so as to arrange the sealing element (23) in the mounting orifice (M).

11. The method as claimed in claim 8 or claim 9 or 10, insofar as they refer back to claim 8, **characterized in that** the igniter (20) is arranged in the inner chamber (I) of the gas generator (1) in such a way that it covers the orifice (21c) in the igniter cap (21) to form a pressure chamber (22) of the gas generator (1).

12. The method as claimed in claim 11, **characterized in that** the igniter (20) is introduced with a free end portion (20c) in the first direction (R) into the orifice (21c) in the igniter cap (21), the igniter (20) being positioned transversely of the first direction (R).

13. The method as claimed in claim 11 or 12, **characterized in that** the sealing element (23) is arranged in such a way in the mounting orifice (M) that the igniter (20) is pressed, for gas-tight closure of the pressure chamber (22), with a second bearing area (20b) against a bearing area (21d) of the igniter cap (21) surrounding the orifice (21c) of the igniter cap (21) by the force (F) acting in the first direction (R).

14. The method as claimed in claim 13, **characterized in that** the second bearing area (20b) of the igniter (20) and/or the bearing area (21d) of the igniter cap (21) is deformed in the first direction (R) by the force (F) in such a way that the two bearing areas (20b, 21d) rest sealingly against one another for gas-tight closure of the pressure chamber (22).

15. The method as claimed in claim 14, **characterized in that** deformation of the second bearing area (20b) of the igniter (20) and/or of the bearing area (21d) of the igniter cap (21) is limited in the first direction (R) **in that** a side of the sealing element (23) facing the igniter cap (21) in the first direction (R) abuts against a side of the igniter cap (21) facing the sealing element (23) in the first direction.

16. The method as claimed in one of the preceding claims, **characterized in that** a baffle element (10) for swirling the gases releasable by means of the gas generator (1) to be produced is arranged in the inner chamber (I) of the housing (2) in such a way that the baffle element (10) may be supported on an inner side (4) of the housing (2) facing the mounting orifice (M) in the first direction (R).

17. The method as claimed in claim 16, **characterized in that** a spring element (26) is arranged in the first direction (R) between the inner side (4) and the baffle element (10), which spring element is resiliently deformable in the first direction (R).

18. The method as claimed in claim 16 or 17, **characterized in that** a propellant can (14) is arranged in the inner chamber (I) of the housing of the gas generator (1) in such a way that the propellant can (14) may be supported with a second peripheral area (16) opposite the baffle element (10) in the first direction (R) against the baffle element (10).

19. The method as claimed in claim 18, **characterized in that** the propellant can (14) is filled with a propellant (17).

20. The method as claimed in claim 18 or 19, **characterized in that** in the first direction (R) a resiliently deformable volume compensating element (19) is introduced into the propellant can (14).

21. The method as claimed in claim 16 or 17 and one of claims 18 to 20, **characterized in that** the sealing element (23) is arranged in the mounting orifice (M) in such a way that the force (F) exerted by the sealing element (23) on the igniter (20) is introduced into the housing (2) via the propellant can (14) and the baffle element (10).

22. The method as claimed in claims 17 and 21, **characterized in that** the sealing element (23) is arranged in the mounting orifice (M) in such a way that the spring element (26) is deformed by the force (F) in the first direction (R).

23. The method as claimed in one of the preceding claims, **characterized in that** the sealing element (23) is clamped form-fittingly together with an area (24) of the housing (2) surrounding the mounting orifice (M), whereby the force (F) acting in the first direction (R) is generated.

24. The method as claimed in claim 23, **characterized in that** the sealing element (23) is clamped together with the housing (2) in such a way that the area (24) projects transversely of the first direction (R) into an inner chamber (I) surrounded by the housing (2) and engages, transversely of the first direction (R), in a recess, in particular a groove (25), of the sealing element (23).

25. The method as claimed in one of claims 1 to 22, **characterized in that** the sealing element (23) is screwed into the mounting orifice (M), whereby the force (F) acting in the first direction (R) is generated.

26. A gas generator having:
- a housing (2), which surrounds an inner chamber (I) of the gas generator (1),
- an igniter (20) for igniting the gas generator (1), such that the gas generator (1) generates a gas, the igniter (20) being supported in a first direction (R) on a part (21) of the gas generator (1),
- a mounting orifice (M) of the housing (2), through which components of the gas generator (1) may be introduced into the inner chamber (I) of the gas generator (1) during mounting of the gas generator (1), and
- a sealing element (23) for sealing the mounting orifice (M), which sealing element is arranged in the mounting orifice (M) in such a way that it presses against a first bearing area (20a) of the igniter (20) via a bearing area (23b) deformable in the first direction (R) with a force (F) acting in the first direction (R),
**characterized in that**
a gap (26) is formed between the sealing element (23) and the part (21) of the gas generator (1) when the two bearing areas (23b, 20a) just come into surface contact when moving closer together in the first direction (R), and **in that** the gap (26) is closable upon arrangement of the sealing element (23) in the mounting orifice (M) by pressing the sealing element (23) in the first direction (R) towards the first bearing area (20a), such that deformation of the bearing area (23b) of the sealing element (23) is limited in the first direction (R).

27. The gas generator as claimed in claim 26, **characterized in that** the sealing element (23) comprises an opening (23a) for accommodating a contact zone (20d) of the igniter (20), via which the igniter (20) is activatable.

28. The gas generator as claimed in claims 26 and 27, **characterized in that** the bearing area (23b) of the sealing element (23) annularly surrounds the opening (23a) transversely of the first direction (R).

29. The gas generator as claimed in one of claims 26 to 28, **characterized in that** the bearing area (23b) of the sealing element (23) and/or the first bearing area (20a) of the igniter (20) takes the form of a first seal element deformable in the first direction (R), which seal element is deformed by the sealing element (23) pressing against the igniter (20) in such a way in the first direction (R) that the two bearing areas (23b, 20a) rest sealingly against one another.

30. The gas generator as claimed in claim 29, **characterized in that** the gap (26) is closable on arrangement of the sealing element (23) in the mounting orifice (M) by pressing the sealing element (23) in the first direction (R), such that deformation of the first seal element is limited in the first direction (R).

31. The gas generator as claimed in one of claims 26 to 30, **characterized in that** the sealing element (23) together with the igniter (20) closes the mounting orifice (M) in a gas-tight manner.

32. The gas generator as claimed in one of claims 26 to 31, **characterized in that** the sealing element (23) and the igniter (20) form a preassembled sub-module.

33. The gas generator as claimed in one of claims 26 to 32, **characterized in that** the part of the gas generator (1), against which the igniter (20) is supported, takes the form of an igniter cap (21), which surrounds a pressure chamber (22) of the gas generator (1).

34. The gas generator as claimed in claim 33, **characterized in that** the igniter cap (21) comprises an orifice (21a), which is opposite the mounting orifice (M) in the first direction (R).

35. The gas generator as claimed in claim 34, **characterized in that** the orifice (21c) of the igniter cap (21) is bounded by a bearing area (21d) of the igniter cap (21), which annularly surrounds the orifice (21c).

36. The gas generator as claimed in claim 35, **characterized in that** the bearing area (21d) of the igniter cap (21) is constructed in the manner of a funnel for positioning the igniter (20) relative to the igniter cap (21) in a plane oriented perpendicularly to the first direction (R).

37. The gas generator as claimed in claim 35 or 36, **characterized in that** the sealing element (23) is arranged in such a way in the mounting orifice (M) that it presses the igniter (20) with a second bearing area (20b) against the bearing area (21d) of the igniter cap (21) with the force (F) acting in the first direction (R) for gas-tight closure of the pressure chamber (22).

38. The gas generator as claimed in claim 37, **characterized in that** the second bearing area (20b) of the igniter (20) and/or the bearing area (21d) of the igniter cap (21) takes the form of a second seal element deformable in the first direction (R), which second seal element is deformed in the first direction (R) in such a way that the two bearing areas (20b, 21d) rest sealingly against one another.

39. The gas generator as claimed in claim 38, **characterized in that** a gap (26) surrounding the igniter (20) is formed between the sealing element (23) and the igniter cap (21) in the first direction (R) when the two bearing areas (20b, 21d) just come into surface contact when moving closer together in the first direction (R), and **in that** the gap (26) is closable upon arrangement of the sealing element (23) in the mounting orifice (M) by pressing the sealing element (23) in the first direction (R), such that deformation of the second seal element is limited in the first direction (R).

40. The gas generator as claimed in one of claims 26 to 39, **characterized in that** the gas generator (1) comprises a propellant can (14) filled with propellant (17), which extends in the first direction (R) in the inner chamber (I) of the housing (2).

41. The gas generator as claimed in claim 40, **characterized in that** a volume compensating element (19) is introduced in the first direction (R) into the propellant can (14), which volume compensating element presses in the first direction (R) in such a way against the propellant (17) that movement of the propellant (17) in the propellant can (14) is suppressed.

42. The gas generator as claimed in claim 40 or 41, **characterized in that** the propellant can (14) comprises a first orifice (18), which is opposite the mounting orifice (M) in the first direction (R).

43. The gas generator as claimed in claim 42, **characterized in that** the first orifice (18) of the propellant can (14) is bounded by a first peripheral area (18a) of the propellant can (14).

44. The gas generator as claimed in one of claims 33 to 39 and one of claims 40 to 43, **characterized in that** the igniter cap (21) is supported in the first direction (R) against the first peripheral area (18a) of the propellant can (14), such that the force (F), which the sealing element (23) exerts in the first direction (R) on the igniter (20), is introduced via the propellant can (14) into the housing (2).

45. The gas generator as claimed in claims 40 to 44, **characterized in that** the propellant can (14) comprises a second orifice (15), which is opposite the first orifice (18) in the first direction (R).

46. The gas generator as claimed in claim 45, **characterized in that** the propellant can (14) is supported with a second peripheral area (16), which bounds the second orifice (15), against a baffle element (10) which is arranged in the first direction (R) between the propellant can (14) and an inner side (4) facing the mounting orifice (M), the baffle element (10) serving to swirl the gases generatable in the propellant can (14).

47. The gas generator as claimed in claim 46, **characterized in that** the baffle element (10) comprises a flat area (13), which extends transversely of the first direction (R) and closes the second orifice (15) of the propellant can (14).

48. The gas generator as claimed in claim 46 or 47, **characterized in that** the baffle element (10) is supported in the first direction (R) against the inner side of the housing (2), such that the force (F), which the sealing element (23) exerts on the igniter (20), is introduced into the housing (2) via the baffle element (10).

49. The gas generator as claimed in one of claims 46 to 48, **characterized in that** the baffle element (10) is supported in the first direction (R) on a spring element (26), which is arranged between the inner side (4) and the baffle element (10) in the first direction (R) so as to absorb the force (F) which the sealing element (23) exerts on the igniter (20).

50. The gas generator as claimed in one of claims 26 to 49, **characterized in that** the sealing element (23) is clamped together with an area (24) of the housing (2) in such a way that the sealing element (23) presses against the igniter (20) with the force (F) acting in the first direction (R).

51. The gas generator as claimed in claim 50, **characterized in that** the area (24) surrounds the sealing element (23).

52. The gas generator as claimed in one of claims 50 or 51, **characterized in that** the area (24) projects transversely of the first direction (R) into an inner chamber (I) surrounded by the housing (2).

53. The gas generator as claimed in one of claims 50 to 52, **characterized in that** the area (24) engages transversely of the first direction (R) in a recess (25), which takes the form in particular of a groove surrounding the sealing element (23).

54. The gas generator as claimed in one of claims 26 to 49, **characterized in that** the sealing element (23) is screwed into the mounting orifice (M) in such a way that the sealing element (23) presses against the igniter (20) with the force (F) acting in the first direction (R).

## Revendications

1. Procédé de fabrication d'un générateur de gaz, comprenant les étapes :
- de disposition d'un allumeur (20) dans un espace intérieur (I) entouré par un boîtier (2) du générateur de gaz (1) à fabriquer de telle sorte que l'allumeur (2) s'appuie le long d'une première direction (R) sur une partie (21) du générateur de gaz (1) et est opposée le long de la première direction (R) à une ouverture de montage (M) du boîtier (2), et
- de disposition d'un élément d'étanchéité (23) dans l'ouverture de montage (M) du boîtier (2) destiné à étanchéifier l'ouverture de montage (M) de telle sorte que l'élément d'étanchéité (23), au-dessus d'une zone d'appui (23b) déformable le long de la première direction (R), repousse une première zone d'appui (20a) de l'allumeur (20), avec une force (F) agissant le long de la première direction (R) de sorte qu'une liaison étanche au gaz est formée entre l'élément d'étanchéité (23) et l'allumeur (20),
- la déformation de la zone d'appui (23b) de l'élément d'étanchéité (23) le long de la première direction (R) étant limitée en ce qu'une face d'élément d'étanchéité (23) tournée vers la partie (21) du générateur de gaz (23) le long de la première direction (R) vient en butée contre une face de cette partie (21) du générateur de gaz (1).

2. Procédé selon la revendication 1, **caractérisé en ce que** l'élément d'étanchéité (23) est disposé par rapport à l'allumeur (20) de telle sorte qu'un évidement (23a) de l'élément d'étanchéité (23) entoure l'allumeur au moins par sections.

3. Procédé selon la revendication 2, **caractérisé en ce qu'**une zone de contact (20d) de l'allumeur (20), au-dessus de laquelle l'allumeur (20) peut être activé, est guidée à travers l'évidement (23a) de l'élément d'étanchéité (23) de sorte que la zone de contact (20d) est accessible par l'espace extérieur du boîtier (2), après que l'élément d'étanchéité (23) a été disposé dans l'ouverture de montage (M).

4. Procédé selon la revendication 2 ou 3, **caractérisé en ce que** l'élément d'étanchéité (23) est disposé dans l'ouverture de montage (M) de telle sorte qu'une zone d'appui (23b) de l'élément d'étanchéité (23) entourant l'évidement (23a) de l'élément d'étanchéité (23), pour réaliser la liaison étanche au gaz, est pressée par la force (F) agissant le long de la première direction (R) contre une première zone d'appui (20a) de l'allumeur (20).

5. Procédé selon la revendication 4, **caractérisé en ce que** la zone d'appui (23b) de l'élément d'étanchéité (23) et la première zone d'appui (20a) de l'allumeur (20) sont déformées le long de la premier direction (R) par la force (F) de telle sorte que les deux zones d'appui (23b, 20a) sont accolées de manière étanche pour réaliser la liaison étanche au gaz.

6. Procédé selon l'une quelconque des revendications précédentes, **caractérisé par** une disposition d'un capuchon d'allumeur (21) dans l'espace intérieur (I) du boîtier (2) de telle sorte que le capuchon d'allumeur (21) peut s'appuyer le long de la première direction (R) contre une partie (14) du générateur de gaz (1) située dans l'espace intérieur (I).

7. Procédé selon la revendication 5 ou 6, **caractérisé en ce que** la déformation de la zone d'appui (23b) de l'élément d'étanchéité (23) et de la première zone d'appui (20a) de l'allumeur (20) le long de la première direction (R) est limitée **en ce qu'**une face de l'élément d'étanchéité (23) tournée vers le capuchon d'allumeur (21) le long de la première direction (R) vient buter contre une face du capuchon d'allumeur (21) tournée vers l'élément d'étanchéité (23) le long de la première direction.

8. Procédé selon la revendication 6 ou 7, **caractérisé en ce que** le capuchon d'allumeur (21) est disposé dans l'espace intérieur (I) du boîtier (2) de telle sorte qu'une ouverture (21c) du capuchon d'allumeur (21) le long de la première direction (R) est tournée vers l'ouverture de montage (M) du boîtier (2).

9. Procédé selon l'une quelconque des revendications précédentes, **caractérisé en ce que** l'élément d'étanchéité (23) est préassemblé à l'extérieur de l'espace intérieur (I) du boîtier (2) avec l'allumeur (20) pour obtenir un sous-module.

10. Procédé selon la revendication 9, **caractérisé en ce que** le sous-module destiné à disposer l'élément d'étanchéité (23) dans l'ouverture de montage (M) avec l'allumeur (20) est introduit par l'avant le long de la première direction (R) à travers l'ouverture de montage (M) dans le boîtier (2).

11. Procédé selon la revendication 8 ou la revendication 9 ou 10, dans la mesure où elle se rapporte à la revendication 8, **caractérisé en ce que** l'allumeur (20) est disposé dans l'espace intérieur (I) du générateur de gaz (1) de telle sorte qu'il recouvre l'ouverture (21c) du capuchon d'allumeur (21) pour réaliser une chambre de pression (22) du générateur de gaz (1).

12. Procédé selon la revendication 11, **caractérisé en ce que** l'allumeur (20) est introduit avec une section d'extrémité libre (20c) le long de la première direction (R) dans l'ouverture (21c) du capuchon d'allumeur (21), l'allumeur (20) étant positionné transversalement à la première direction (R).

13. Procédé selon la revendication 11 ou 12, **caractérisé en ce que** l'élément d'étanchéité (23) est disposé dans l'ouverture de montage (M) de telle sorte que l'allumeur (20) est pressé avec une seconde zone d'appui (20b) par la force (F) agissant le long de la première direction (R) contre une zone d'appui (21d) du capuchon d'allumeur (21) entourant l'ouverture (21c) du capuchon d'allumeur (21) pour fermer de façon étanche au gaz la chambre de pression (22).

14. Procédé selon la revendication 13, **caractérisé en ce que** la seconde zone d'appui (20b) de l'allumeur (20) et/ou la zone d'appui (21d) du capuchon d'allumeur (21) sont déformées le long de la première direction (R) par la force (F) de telle sorte que les deux zones d'appui (20b, 21d) sont accolées de manière étanche pour fermer de manière étanche au gaz la chambre de pression (22).

15. Procédé selon la revendication 14, **caractérisé en ce que** la déformation de la seconde zone d'appui (20b) de l'allumeur (20) et/ou de la zone d'appui (21d) du capuchon d'allumeur (21) le long de la première direction (R) est limitée **en ce qu'**une face de l'élément d'étanchéité (23) tournée vers le capuchon d'allumeur (21) le long de la première direction (R) vient en butée contre une face du capuchon d'allumeur (21) tournée vers l'élément d'étanchéité (23) le long de la première direction.

16. Procédé selon l'une quelconque des revendications précédentes, **caractérisé en ce qu'**un élément d'impact (10) destiné à faire tourbillonner les gaz pouvant être libérés au moyen du générateur de gaz (1) à fabriquer est disposé dans l'espace intérieur (I) du boîtier (2) de telle sorte que l'élément d'impact (10) peut s'appuyer contre une face intérieure (4) du boîtier (2) tournée vers l'ouverture de montage (M) le long de la première direction (R).

17. Procédé selon la revendication 16, **caractérisé en ce qu'**un élément formant ressort (26), lequel peut être facilement déformé le long de la première direction (R), est disposé le long de la première direction (R) entre la face interne (4) et l'élément d'impact (10).

18. Procédé selon la revendication 16 ou 17, **caractérisé en ce qu'**une douille de combustible (14) est disposée dans l'espace intérieur (I) du boîtier du générateur de gaz (1) de telle sorte que la douille de combustible (14) peut s'appuyer avec une seconde zone latérale (16) opposée à l'élément d'impact (10) le long de la première direction (R) contre l'élément d'impact (10).

19. Procédé selon la revendication 18, **caractérisé en ce que** la douille de combustible (14) est remplie d'un combustible (17).

20. Procédé selon la revendication 18 ou 19, **caractérisé en ce qu'**un élément de compensation de volume (19) facilement déformable est introduit dans la douille de combustible (14) le long de la première direction (R).

21. Procédé selon la revendication 16 ou 17 ou selon l'une des revendications 18 à 20, **caractérisé en ce que** l'élément d'étanchéité (23) est disposé dans l'ouverture de montage (M) de telle sorte que la force (F) exercée par l'élément d'étanchéité (23) sur l'allumeur (20) est envoyée par la douille de combustible (14) et l'élément d'impact (10) dans le boîtier (2).

22. Procédé selon la revendication 17 et 21, **caractérisé en ce que** l'élément d'étanchéité (23) est disposé dans l'ouverture de montage (M) de telle sorte que l'élément formant ressort (26) est déformé part la force (F) le long de la première direction (R).

23. Procédé selon l'une quelconque des revendications précédentes, **caractérisé en ce que** l'élément d'étanchéité (23) est serré par coopération de formes avec une zone (24) du boîtier (2) entourant l'ouverture de montage (M), la force (F) agissant le long de la première direction (R) étant produite.

24. Procédé selon la revendication 23, **caractérisé en ce que** l'élément d'étanchéité (23) est serré avec le boîtier (2) de telle sorte que la zone (24) dépasse transversalement à la première direction (R) dans un espace intérieur (I) entouré par le boîtier (2) et se met en prise transversalement à la première direction (R) dans un évidement, en particulier une rainure (25), de l'élément d'étanchéité (23).

25. Procédé selon l'une quelconque des revendications 1 à 22, **caractérisé en ce que** l'élément d'étanchéité (23) est vissé dans l'ouverture de montage (M), la force (F) agissant le long de la première direction (R) étant produite.

26. Générateur de gaz comprenant :
- un boîtier (2), qui entoure un espace intérieur (I) du générateur de gaz (1),
- un allumeur (20) destiné à allumer le générateur de gaz (1), de sorte que le générateur de gaz (1) produit un gaz, l'allumeur (20) s'appuyant le long d'une première direction (R) sur une partie (21) du générateur de gaz (1),
- une ouverture de montage (M) du boîtier (2), à travers laquelle lors du montage du générateur de gaz (1) des composants du générateur de gaz (1) peuvent être introduits dans l'espace intérieur (I) du générateur de gaz (1), et
- un élément d'étanchéité (23) destiné à étanchéifier l'ouverture de montage (M), qui est disposé dans l'ouverture de montage (M) de telle sorte qu'il repousse au-dessus d'une zone d'appui (23b) déformable le long de la première direction (R) avec une force (F) agissant le long de la première direction (R) une première zone d'appui (20a) de l'allumeur (20),
**caractérisé en ce que**
un espace (26) est conçu entre l'élément d'étanchéité (23) et la partie (21) du générateur de gaz (1) lorsque les deux zones d'appui (23b, 20a) reposent justement à plat l'une sur l'autre lorsqu'elles sont rapprochées le long de la première direction (R), et **en ce que** l'espace (26), lorsque l'élément d'étanchéité (23) est disposé dans l'ouverture de montage (M), peut être fermé par la pression de l'élément d'étanchéité (23) le long de la première direction (R) en direction de la première zone d'appui (20a), de sorte que la déformation de la zone d'appui (23b) de l'élément d'étanchéité (23) le long de la première direction (R) est limitée.

27. Générateur de gaz selon la revendication 26, **caractérisé en ce que** l'élément d'étanchéité (23) comprend un évidement (23a) destiné à recevoir une zone de contact (20d) de l'allumeur (20), au-dessus de laquelle l'allumeur (20) peut être activé.

28. Générateur de gaz selon les revendications 26 et 27, **caractérisé en ce que** la zone d'appui (23b) de l'élément d'étanchéité (23) entoure de manière annulaire l'évidement (23a) transversalement à la première direction (R).

29. Générateur de gaz selon l'une quelconque des revendications 26 à 28, **caractérisé en ce que** la zone d'appui (23b) de l'élément d'étanchéité (23) et/ou la première zone d'appui (20a) de l'allumeur (20) sont conçues comme un premier élément d'étanchéification déformable le long de la première direction (R), **en ce que** l'élément d'étanchéité (23) repoussant l'allumeur (20) est déformé le long de la première direction (R) de telle sorte que les deux zones d'appui (23b, 20a) sont accolées de manière étanche.

30. Générateur de gaz selon la revendication 29, **caractérisé en ce que** lorsque l'élément d'étanchéité (23) est disposé dans l'ouverture de montage (M), l'espace (26), peut être fermé par une pression de l'élément d'étanchéité (23) le long de la première direction (R), de sorte que la déformation du premier élément d'étanchéification le long de la première direction (R) est limitée.

31. Générateur de gaz selon l'une quelconque des revendications 26 à 30, **caractérisé en ce que** l'élément d'étanchéité (23), conjointement avec l'allumeur (20), ferme de manière étanche au gaz l'ouverture de montage (M).

32. Générateur de gaz selon l'une quelconque des revendications 26 à 31, **caractérisé en ce que** l'élément d'étanchéité (23) et l'allumeur (20) forment un sous-module préassemblé.

33. Générateur de gaz selon l'une quelconque des revendications 26 à 32, **caractérisé en ce que** la partie du générateur de gaz (1) sur laquelle s'appuie l'allumeur (20) est conçue comme un capuchon d'allumeur (21) qui entoure une chambre de pression (22) du générateur de gaz (1).

34. Générateur de gaz selon la revendication 33, **caractérisé en ce que** le capuchon d'allumeur (21) comprend une ouverture (21a) qui est opposée à l'ouverture de montage (M) le long de la première direction (R).

35. Générateur de gaz selon la revendication 34, **caractérisé en ce que** l'ouverture (21c) du capuchon d'allumeur (21) est bordée par une zone d'appui (21 d) du capuchon d'allumeur (21) qui entoure de manière annulaire l'ouverture (21c).

36. Générateur de gaz selon la revendication 35, **caractérisé en ce que** la zone d'appui (21d) du capuchon d'allumeur (21) destinée à positionner l'allumeur (20) par rapport au capuchon d'allumeur (21) est conçue en forme d'entonnoir dans un plan orienté perpendiculairement à la première direction (R).

37. Générateur de gaz selon la revendication 35 ou 36, **caractérisé en ce que** l'élément d'étanchéité (23) est disposé dans l'ouverture de montage (M) de telle sorte qu'il presse l'allumeur (20) avec une seconde zone d'appui (20b) pour fermer de manière étanche au gaz la chambre de pression (22) avec la force (F) agissant le long de la première direction (R) contre la zone d'appui (21d) du capuchon d'allumeur (21).

38. Générateur de gaz selon la revendication 37, **caractérisé en ce que** la seconde zone d'appui (20b) de l'allumeur (20) et/ou la zone d'appui (21d) du capuchon d'allumeur (21) sont conçues comme un second élément d'étanchéification déformable le long de la première direction (R), qui est déformé le long de la première direction (R) de telle sorte que les deux zones d'appui (20b, 21d) sont accolées de manière étanche.

39. Générateur de gaz selon la revendication 38, **caractérisé en ce qu'**un espace (26) entourant l'allumeur (20) est conçu entre l'élément d'étanchéité (23) et le capuchon d'allumeur (21) le long de la première direction (R) lorsque les deux zones d'appui (20b, 21d) reposent justement à plat l'une sur l'autre lorsqu'elles sont rapprochées le long de la première direction (R), et **en ce que** l'espace (26), lorsque l'élément d'étanchéité (23) est disposé dans l'ouverture de montage (M), peut être fermé par la pression de l'élément d'étanchéité (23) le long de la première direction (R), de sorte que la déformation du second élément d'étanchéité le long de la première direction (R) est limitée.

40. Générateur de gaz selon l'une quelconque des revendications 26 à 39, **caractérisé en ce que** le générateur de gaz (1) comprend une douille de combustible (14) remplie de combustible (17), qui s'étend dans l'espace intérieur (I) du boîtier (2) le long de la première direction (R).

41. Générateur de gaz selon la revendication 40, **caractérisé en ce qu'**un élément de compensation de volume (19) est introduit dans la douille de combustible (14) le long de la première direction (R), lequel le long de la première direction (R) repousse le combustible (17) de telle sorte qu'un déplacement du combustible (17) dans la douille de combustible (14) est éliminé.

42. Générateur de gaz selon la revendication 40 ou 41, **caractérisé en ce que** la douille de combustible (14) comprend une première ouverture (18) qui est opposée à l'ouverture de montage (M) le long de la première direction (R).

43. Générateur de gaz selon la revendication 42, **caractérisé en ce que** la première ouverture (18) de la douille de combustible (14) est bordée par une première zone latérale (18a) de la douille de combustible (14).

44. Générateur de gaz selon l'une quelconque des revendications 33 à 39 et selon l'une quelconque des revendications 40 à 43, **caractérisé en ce que** le capuchon d'allumeur (21) s'appuie le long de la première direction (R) contre la première zone latérale (18a) de la douille de combustible (14) de sorte que la force (F) que l'élément d'étanchéité (23) exerce le long de la première direction (R) sur l'allumeur (20) est envoyée par la douille de combustible (14) dans le boîtier (2).

45. Générateur de gaz selon l'une quelconque des revendications 40 à 44, **caractérisé en ce que** la douille de combustible (14) comprend une seconde ouverture (15) qui est opposée à la première ouverture (18) le long de la première direction (R).

46. Générateur de gaz selon la revendication 45, **caractérisé en ce que** la douille de combustible (14) avec une seconde zone latérale (16), qui borde la seconde ouverture (15), s'appuie contre un élément d'impact (10), qui est disposé le long de la première direction (R) entre la douille de combustible (14) et une face intérieure (4) tournée vers l'ouverture de montage (M), l'élément d'impact (10) servant à faire tourbillonner les gaz pouvant être produits dans la douille de combustible (14).

47. Générateur de gaz selon la revendication 46, **caractérisé en ce que** l'élément d'impact (10) comprend une zone plate (13) qui s'étend transversalement à la première direction (R) et ferme la seconde ouverture (15) de la douille de combustible (14).

48. Générateur de gaz selon la revendication 46 ou 47, **caractérisé en ce que** l'élément d'impact (10) s'appuie le long de la première direction (R) sur la face intérieure du boîtier (2), de sorte que la force (F), que l'élément d'étanchéité (23) exerce sur l'allumeur (20), est envoyée par l'élément d'impact (10) dans le boîtier (2).

49. Générateur de gaz selon l'une quelconque des revendications 46 à 48, **caractérisé en ce que** l'élément d'impact (10) s'appuie le long de la première direction (R) contre un élément formant ressort (26) qui, pour recevoir la force (F) que l'élément d'étanchéité (23) exerce sur l'allumeur (20), est disposé le long de la première direction (R) entre la face intérieure (4) et l'élément d'impact (10).

50. Générateur de gaz selon l'une quelconque des revendications 26 à 49, **caractérisé en ce que** l'élément d'étanchéité (23) est serré avec une zone (24) du boîtier (2) de telle sorte que l'élément d'étanchéité (23), avec la force (F) agissant le long de la première direction (R), repousse l'allumeur (20).

51. Générateur de gaz selon la revendication 50, **caractérisé en ce que** la zone (24) entoure l'élément d'étanchéité (23).

52. Générateur de gaz selon la revendication 50 ou 51, **caractérisé en ce que** la zone (24) dépasse transversalement à la première direction (R) dans un espace intérieur (I) entouré par le boîtier (2).

53. Générateur de gaz selon l'une quelconque des revendications 50 à 52, **caractérisé en ce que** la zone (24) se met en prise transversalement à la première direction (R) dans un évidement (25) qui est conçu en particulier comme une rainure entourant l'élément d'étanchéité (23).

54. Générateur de gaz selon l'une quelconque des revendications 26 à 49, **caractérisé en ce que** l'élément d'étanchéité (23) est vissé dans l'ouverture de montage (M) de telle sorte que l'élément d'étanchéité (23) avec la force (F) agissant le long de la première direction (R) repousse l'allumeur (20).
